# EUROPÄISCHE PATENTSCHRIFT

(11) **EP 3 776 622 B1**
(45) Veröffentlichungstag und Bekanntmachung des Hinweises auf die Patenterteilung: **05.11.2025**
(21) Anmeldenummer: 19716798.4
(22) Anmeldetag: 22.03.2019
(51) Int. Cl.: H01J 35/26, H01J 35/10, H01J 35/14, G01N 23/046

(54) **VORRICHTUNG UND VERFAHREN ZUR COMPUTERTOMOGRAFISCHEN MESSUNG VON WERKSTÜCKEN MIT DREHBAREM TARGETTRÄGER**
DEVICE AND METHOD FOR MEASURING WORKPIECES BY WAY OF COMPUTER TOMOGRAPHY HAVING ROTATABLE TARGET SUPPORT
DISPOSITIF ET PROCÉDÉ DE MESURE TOMOGRAPHIQUE INFORMATIQUE DE PIÈCES À USINER À PORTE-CIBLE ROTATIF

(30) Priorität: 03.04.2018 DE 102018107799; 08.05.2018 DE 102018111073; 10.07.2018 DE 102018116604; 20.08.2018 DE 102018120166; 13.11.2018 DE 102018128310; 04.03.2019 DE 102019105345
(43) Veröffentlichungstag der Anmeldung: 17.02.2021
(73) Patentinhaber: Werth Messtechnik GmbH, 35394 Giessen (DE)
(72) Erfinder: CHRISTOPH, Ralf, 35394 Gießen (DE); CHRISTOPH, Raoul, 35394 Gießen (DE); STOSCHUS, Henning, 35578 Wetzlar (DE); LEINWEBER, Carsten, 35274 Kirchhain (DE); TRAPP, Philip, 69118 Heidelberg-Ziegelhausen (DE); HAMMER, Michael, 35447 Reiskirchen (DE); SCHRÖTER, Daniel, 61169 Friedberg (DE); EICHNER, Lutz, 35394 Gießen (DE); GRUHL, Thomas, 30974 Wennigsen (DE); STOPP, Lukas Joachim, 1050 Wien (AT)
(74) Vertreter: Stoffregen, Hans-Herbert
(86) Internationale Anmeldenummer: PCT/EP2019/057264
(87) Internationale Veröffentlichungsnummer: WO 2019/192860

(56) Entgegenhaltungen:
- DE-A1- 102015 101 378
- DE-A1- 102016 101 005
- DE-A1- 102017 100 594
- DE-T2- 69 736 368
- US-A1- 2014 185 778
- JELMER M. WOLTERINK ET AL: "Generative Adversarial Networks for Noise Reduction in Low-Dose CT", IEEE TRANSACTIONS ON MEDICAL IMAGING., vol. 36, no. 12, 26 May 2017 (2017-05-26), US, pages 2536 - 2545, XP055504104, ISSN: 0278-0062, DOI: 10.1109/TMI.2017.2708987
- HU CHEN ET AL: "Low-dose CT via convolutional neural network", BIOMEDICAL OPTICS EXPRESS, vol. 8, no. 2, 9 January 2017 (2017-01-09), United States, pages 679, XP055445363, ISSN: 2156-7085, DOI: 10.1364/BOE.8.000679

## Beschreibung

Gegenstand einer selbstständigen Erfindung ist eine Vorrichtung und ein Verfahren zur Untersuchung, vorzugsweise dimensionellen Messung von Merkmalen an einem Werkstück, mittels Computertomografie, bei dem das Target gedreht wird.

Eine Herausforderung bei der computertomografischen Messung von Werkstücken ist der Verschleiß des Targets und daraus resultierenden Messabweichungen aufgrund veränderter Brennfleckgröße oder Position. Das Target besteht in der Regel aus einem Substrat, auf dem eine Schicht aufgebracht ist, die bei Beschuss mit Elektronen die Röntgenstrahlung erzeugt. Diese Schicht wird aufgrund der thermischen Belastung abgetragen. Um weiter genau messen zu können, muss das Target aufwändig ausgetauscht werden. Hierzu muss die Vakuumröhre der Röntgenquelle geöffnet werden. Bei Röhren mit Reflexionstarget kann auch der Brennfleck auf einen anderen Bereich der Targetbeschichtung gerichtet werden, indem das Target exzentrisch zum Elektronenstrahl gedreht wird. Dies ist hier möglich, weil das Target und der Targetträger vollständig innerhalb der Vakuumröhre angeordnet sind und diese nicht verschließen. Die Drehlagerung kann also separat von der Abdichtung der Vakuumröhre aufgebaut werden. Nach dem Stand der Technik bekannte Vorrichtungen und Verfahren sehen jedoch nur vor, dass das Target permanent während der Messung gedreht wird. Dies ist vorgesehen, um bei gleicher Brennfleckgröße mit höheren Röntgenleistungen messen zu können und wird durch den geringeren Wärmeeintrag ja Zeiteinheit durch das permanente Drehen ermöglicht. Das Drehen des Targets ist hier insbesondere nicht schrittweise vorgesehen und auch nicht dazu, nach jeweils einem festgelegten Targetverschleiß weiter zu drehen, da ansonsten der Wärmeeintrag zu hoch wäre und das Target schmelzen würde.

Für Röntgenröhren mit Transmissionstarget ist diese Lösung bisher nicht vorgesehen, da das Target bzw. der Targetträger die Vakuumröhre mittels einer Dichtung verschließt und bisher nicht im Betrieb drehbar ausgeführt ist. Um ein Weiterdrehen zu ermöglichen, muss bisher der Targetträger gelöst und manuell weitergedreht werden. Dies ist aufwändig und nicht automatisierbar. Insbesondere muss dazu also die Röhre ausgeschaltet werden. Eine weitere Möglichkeit besteht darin, den Elektronenstrahl auf einen anderen Bereich der Targetbeschichtung durch entsprechendes Ablenken zu richten, wie dies die DE102014103439.2 der Anmelderin beschreibt. Hierbei besteht jedoch der Nachteil, dass der Brennfleck bzgl. des zu messenden Werkstücks und der Sensorik (Detektor) verschoben wird. Dies muss aufwändig korrigiert werden, um genau messen zu können.

Aus DE69736368T2 sind eine Drehanodenvorrichtung und ein entsprechendes Verfahren zur Computertomographie bekannt, wobei der Elektronenstrahl unterschiedliche Regionen des drehenden Targets bestrahlt, wobei die Achse des Targetträgers nicht mit dem Elektronenstrahl zusammenfällt und die Drehmittel außerhalb der Röhre angeordnet sind.

DE102017100594A1 betrifft eine Vorrichtung und ein Verfahren zur Computertomographie für Werkstücke, wobei der Elektronenstrahl das drehbare Target exzentrisch trifft, wobei die Drehmittel innerhalb der Röhre angeordnet sind. Der Targetträger ist ein die Röhre verschließender Trägerflansch.

EP3214636 beschreibt die Nutzung eines die Vakuumröhre verschließenden Röntgenfensters als Multitargetträger; die Ansteuerung bestimmter Regionen des Targetträgers, die Targets aus unterschiedlichen Materialien tragen, wird durch geeignetes Verkippen des Fensters erreicht.

Eine weitere Aufgabe der vorliegenden Erfindung besteht daher darin, eine computertomografische Messung, insbesondere bei Einsatz einer Röntgenröhre mit Transmissionstarget, hoher Genauigkeit zu ermöglichen, bei der mit einfachen und automatisierbaren Mitteln vermieden wird, mit verschlissenem Target zu messen.

Zur Lösung sieht die Erfindung die Verwendung unterschiedlicher Targetbereiche für den Brennfleck vor, indem das Target durch außerhalb der Vakuumröhre angeordnete Mittel drehbar ausgeführt ist.

Eine erfindungsgemäße Vorrichtung sieht zur Lösung vor eine Vorrichtung zur computertomografischen Untersuchung von Werkstücken, vorzugsweise dimensionellen Messung von Merkmalen an den Werkstücken, umfassend eine Strahlungsquelle (Quelle) wie Röntgenstrahlenquelle für einen Computertomografen, wobei die Quelle zumindest umfasst einen Grundkörper (Röhrenkopf) von dem eine Vakuumröhre enthaltend eine Einrichtung zur Fokussierung eines Elektronenstrahls auf ein Target ausgeht, einen die Vakuumröhre verschließenden Targetträger, von dem das Target ausgeht, wobei das Target einen bei Bestrahlung mit Elektronen Röntgenstrahlung erzeugenden Bereich aufweist, der durch eine Beschichtung eines Substrats gebildet wird, und wobei der Targetträger drehbar ausgebildet ist um eine Achse, die das Target versetzt zum Auftreffpunkt (Brennfleck) des Elektronenstrahls auf das Target durchdringt, und wobei das Target besonders bevorzugt als Transmissionstarget ausgebildet ist, die sich dadurch auszeichnet, dass die Vorrichtung außerhalb der Vakuumröhre angeordnete Mittel zur Drehung (Drehmittel) des Targetträgers aufweist, wobei die Mittel ausgehen von dem Grundkörper (Röhrenkopf) selbst und/oder von einem vom Grundkörper (Röhrenkopf) ausgehenden und in der Röntgenstrahlung angeordneten Strahlführungskörper (Strahlblende).

Beispielhaft ist der Targetträger aus Metall, das Substrat aus Diamant und die Beschichtung aus Wolfram gefertigt. Der Targetträger verschließ die Vakuumröhre über eine Dichtung. Diese Dichtung ist so ausgeführt, dass eine Drehung des Targetträgers und damit des Targets möglich ist. Hierzu ist nach einer besonderen Ausführungsform vorgesehen, dass der Targetträger mittels Federkraft an die Dichtung und damit die Vakuumröhre angekoppelt ist. Durch eine Stellschraube kann die Federkraft auch einstellbar ausgeführt sein. Die Feder kann zwischen der drehbaren Strahlblende und dem drehbaren Targetträger verlaufen, dreht sich also mit, oder ist fest angeordnet zwischen einem fest mit dem Röhrenkopf verbundenem Teil und einem zur Aufnahme des Targetträgers optional vorhandenem Halter wie Exzenterring.

Die Strahlblende ist beispielhaft an einem Flansch ortsfest oder drehbar gelagert befestigt, der Teil des Röhrenkopfes ist bzw. diesen umschließt und beispielhaft aus Stahl gefertigt ist. Die Strahlblende ist besonders bevorzugt aus Wolfram gefertigt und weist eine zentrale Öffnung aus, um die abgegebene Röntgenstrahlung nur auf einen ausgewählten Bereich zu begrenzen. Dazu ist die Strahlblende entsprechend dick ausgeführt, um die Röntgenstrahlung außerhalb der Öffnung zu absorbieren. In einer besonderen Ausführungsform ist der Außenbereich der Strahlblende nicht aus Wolfram, sondern aus einem anderen Material, beispielswese aus Stahl gefertigt, um Kosten zu sparen. Dieser Außenbereich wird nach einer bevorzugten Ausführungsform genutzt, um die Kopplung zu den Drehmitteln zu realisieren. Wird die Strahlblende drehbar ausgeführt, ist der Querschnitt der Öffnung kreisrund ausgeführt.

Damit bei Drehung des Targetträgers der Elektronenstrahl auf unterschiedliche Bereiche des beschichteten Substrates des Target auftrifft und den Brennfleck bildet, erfolgt die Drehung um eine Achse, die das Target versetzt zum Brennfleck durchdringt. Dadurch wandert der Brennfleck auf dem Target bei Drehung des Targetträgers auf einer Kreisbahn.

Erfindung ist jedoch nicht auf Röntgenröhren mit Transmissionstarget beschränkt, sondern hat auch zur Aufgabe, eine computertomografische Messung bei Einsatz einer Röntgenröhre mit Reflexionstarget mit hoher Genauigkeit zu ermöglichen, bei der mit einfachen und automatisierbaren Mitteln vermieden wird, mit verschlissenem Target zu messen.

Zur Lösung sieht die Erfindung deshalb auch die Verwendung unterschiedlicher Targetbereiche für den Brennfleck vor, indem das Target durch innerhalb der Vakuumröhre angeordnete Mittel drehbar ausgeführt ist. Es soll dabei insbesondere ein schrittweises und/oder vom Verschleiß abhängiges Weiterdrehen ermöglicht werden.

Eine erfindungsgemäße Vorrichtung sieht zur Lösung vor eine Vorrichtung zur computertomografischen Untersuchung von Werkstücken, vorzugsweise dimensionellen Messung von Merkmalen an den Werkstücken, umfassend eine Strahlungsquelle (Quelle) wie Röntgenstrahlenquelle für einen Computertomografen, wobei die Quelle zumindest umfasst einen Grundkörper (Röhrenkopf) von dem eine Vakuumröhre enthaltend eine Einrichtung zur Fokussierung eines Elektronenstrahls auf ein Target ausgeht, einen im Inneren der Vakuumröhre angeordneten Targetträger, von dem das Target ausgeht, wobei das Target einen bei Bestrahlung mit Elektronen Röntgenstrahlung erzeugenden Bereich aufweist, der durch eine Beschichtung eines Substrats gebildet wird, und wobei der Targetträger drehbar ausgebildet ist um eine Achse, die das Target versetzt zum Auftreffpunkt (Brennfleck) des Elektronenstrahls auf das Target durchdringt, und wobei das Target besonders bevorzugt als Reflexionstarget ausgebildet ist, die sich dadurch auszeichnet, dass die Vorrichtung innerhalb der Vakuumröhre angeordnete Mittel zur Drehung (Drehmittel) des Targetträgers aufweist.

Insbesondere zeichnet sich die Erfindung dadurch aus, dass die Drehmittel einen Antrieb wie Motor oder Hubmagnet aufweisen, der zur automatischen Drehung ausgebildet und angesteuert ist.

Die Steuerung zum Betrieb des Motors ist beispielsweise im Computertomografen oder diesen enthaltendem Koordinatenmessgerät (KMG) integriert und erlaubt den automatischen Betrieb der Drehmittel.

Bevorzugterweise ist vorgesehen, dass der Targetträger von einem Exzenterring ausgeht, in dem er um eine Achse drehbar gelagert ist, die das Target versetzt zum Brennfleck durchdringt.

Insbesondere zeichnet sich die Erfindung dadurch aus, dass die Drehmittel vom Röhrenkopf ausgehen und zur Drehung der Strahlblende ausgebildet, also mit dieser gekoppelt sind, wobei von der Strahlblende zumindest ein Mitnehmer ausgeht, der die Drehbewegung auf den Targetträger überträgt, wobei vorzugsweise der oder die Mitnehmer Stifte sind, der Targetträger Sacklöcher, vorzugsweise in radialer Richtung ausgedehnte Langlöcher, aufweist und die Stifte in die Sacklöcher eingeführt sind.

Die Übertragung der Drehung des Motors auf die Strahlblende erfolgt beispielhaft durch ein Schleifrad, Zahnriemen, Schneckenantrieb oder anderes Getriebe. Bevorzugt erfolgt die Übertragung der Drehbewegung des Motors auf den Außenbereich der Strahlblende. Die Strahlblende ist bevorzugt um eine Achse drehbar gelagert, die durch den Brennfleck verläuft. In einer besonders bevorzugten Ausführungsform weist der Targetträger mindestens drei, bevorzugt vier Sacklöcher auf, die radial um das Target verteilt sind, und der von der Strahlblende ausgehende Mitnehmer die entsprechende Anzahl von Stiften. Die Stifte greifen dabei in einen Bereich um das Target ein, der ausreichend weit außerhalb des Target liegt, damit eine Abkühlung in Bezug auf die sehr hohen Temperaturen direkt auf dem Target vorliegt, wobei der Eingriffsbereich vorzugsweise elektrisch isoliert gegenüber den Stiften ist, damit die auf dem Target auftreffenden Elektronen nicht über den Mitnehmer abgeleitet werden. Damit die sich mit dem Mitnehmer drehenden Mitnehmer-Stifte in den Sacklöchern des Targetträgers, der sich um eine hierzu exzentrische Drehachse dreht, radial bewegen können, sind die Sacklöcher bevorzugt als in radialer Richtung ausgedehnte Langlöcher ausgeführt. Die Drehachslage für den Targetträger wird bevorzugt festgelegt durch die exzentrische drehbare Aufnahme des Targetträgers in einem Exzenterring, welcher den Targetträger gegen die Dichtung drückt. Hierdurch ergibt sich auch die Möglichkeit, durch den Einsatz unterschiedlich exzentrischer Exzenterringe unterschiedliche Bahnen auf dem Target für den Brennfleck zu verwenden, also Kreisbahnen unterschiedlichen Durchmessers. Nach einer zusätzlichen oder alternativen Ausgestaltung ist auch vorgesehen, eine andere Kreisbahn einzustellen, indem der Elektronenstrahl entsprechend versetzt auf das Target gerichtet wird.

Bevorzugterweise sieht die Erfindung vor, dass die Drehmittel vom Röhrenkopf ausgehen und zur Drehung des Targetträgers ausgebildet, also mit diesem gekoppelt sind, wobei eine Kopplung mit dem Targetträger realisiert ist durch in dem Targetträger ausgebildete Sacklöcher, in die zumindest ein Mitnehmer eingreift, wobei die Sacklöcher bevorzugt als in radialer Richtung ausgedehnte Langlöcher ausgebildet sind, oder durch Eingriff am Umfang des Targetträgers.

Die Übertragung der Drehung des Motors auf den Targeträger erfolgt wieder beispielhaft durch bereits erwähnte Mitnehmer oder, falls zugänglich durch ein Schleifrad, Zahnriemen, Schneckenantrieb oder anderes Getriebe, das am Umfang des Targetträgers eingreift. In beiden Fällen wird die Drehachse des Targetträgers durch dessen Lagerung im Exzenterring bestimmt.

Hervorzuheben ist des Weiteren, dass zur Erzeugung einer Anpresskraft zwischen dem Targetträger und der Vakuumröhre zumindest ein Anpressmittel wie Feder und/oder Stellschraube vorgesehen ist, welches vorzugsweise zwischen einerseits dem Röhrenkopf oder einem vom Röhrenkopf ausgehendem Halter und andererseits dem Exzenterring und/oder zwischen einerseits der Strahlblende und andererseits dem Targetträger verläuft.

Das Anpressen des Targetträgers an die Vakuumröhre über die Dichtung ist notwendig, um das Vakuum in der Vakuumröhre aufrecht zu erhalten. Andererseits darf die Anpresskraft nur so groß sein, dass der Targetträger in Bezug auf die Vakuumröhre gedreht werden kann. Hierzu muss eine definierte Kraft eingestellt und eingehalten werden. Die Anpressmittel können beispielsweise eine Feder, Einstellschraube oder Kombination aus beiden, also einer mittels Stellschraube einstellbare Federkraft sein. Es sind zwei bevorzugte Lösungen vorgesehen, zwischen welchen beiden Elementen die Anpresskraft erzeugt wird. Die erste Lösung sieht vor, dass die Anpressmittel zwischen den beiden nicht drehbaren Elementen Röhrenkopf und Exzenterring verlaufen. Die zweite Lösung sieht vor, dass die Anpressmittel zwischen den gemeinsam drehbaren Elementen Strahlblende und Targetträger verlaufen.

Die Erfindung zeichnet sich auch dadurch aus, dass zur Überwachung und Regelung der Drehstellung des Targetträger zumindest ein Encoder vorgesehen ist, der aus zumindest den beiden Komponenten Maßstab und Lesekopf besteht, wobei eine der Komponenten, bevorzugt der Maßstab, vom Targetträger oder der Strahlblende und die andere Komponente, bevorzugt der Lesekopf, vom Röhrenkopf ausgeht.

Insbesondere zeichnet sich die Erfindung dadurch aus, dass die Vorrichtung ausgebildet ist, Exzenterringe unterschiedlicher Exzentrizität aufzunehmen, vorzugsweise in dem die unterschiedlichen Exzenterringe identischen Außendurchmesser aufweisen.

Wie bereits beschrieben, ergibt sich dadurch die Möglichkeit, unterschiedliche Bahnen auf dem Target für den Brennfleck zu verwenden, also Kreisbahnen unterschiedlichen Durchmessers. Um die unterschiedlichen Exzenterringe aufnehmen zu können, ist vorgesehen, dass der Außendurchmesser der verschiedenen Exzenterringe identisch ist.

Nach einem besonders hervorzuhebenden Vorschlag ist vorgesehen, dass die Targetbeschichtung segmentweise aus unterschiedlichen Materialien wie beispielsweise Wolfram, Kupfer oder Beryllium und/oder die Targetbeschichtung segmentweise oder kontinuierlich unterschiedlich dick ausgebildet ist.

Die Erfindung zeichnet sich auch dadurch aus, dass der Antrieb im Inneren der Vakuumröhre angeordnet ist und Verbindungskabel aus der Vakuumröhre heraus zu einer Steuerung oder Regelung geführt sind, die mit der Steuerung bzw. Regelung des Computertomografen verbunden oder mit dieser identisch ist.

Eine weitere Aufgabe der vorliegenden Erfindung ist es, auf den manuellen Wechsel von Exzenterringen zu verzichten, um eine Bahn des Brennflecks auf dem Target auf einem veränderten Radius zu realisieren.

Zur Lösung sieht die Erfindung deshalb auch vor, dass ein Antrieb, beispielsweise Piezoantrieb oder Schrittmotor vorgesehen ist, der anstatt des Exzenterringes verwendet wird, um den Radius der Kreisbahn des Elektronenstrahls auf dem drehbaren Target zu verändern. Hierzu ist vorgesehen, dass mittels des Antriebes das Target senkrecht zu dem Elektronenstrahl verschoben wird. Dies erfolgt vorzugsweise zusammen mit dem Targetträger. Hierbei muss sichergestellt werden, dass sich die Achse, um die das Target und der Targetträger gedreht werden, entsprechend ebenso mit senkrecht zu dem Elektronenstrahl verschiebt. Andernfalls würde sich eine nicht zentrische Bahn um die Mitte des Targets ergeben und die verschiedenen Kreisbahnen könnten einander schneiden.

Die Erfindung sieht zur Lösung eine unabhängige oder mit den zuvor genannten Vorrichtungen kombinierbare Vorrichtung vor, die sich auszeichnet durch einen Antrieb, beispielsweise Piezoantrieb oder Schrittmotor, zur Verschiebung des Targets einer Röntgenstrahlenquelle für einen Computertomografen senkrecht zur Richtung des Elektronenstrahls der Röntgenstrahlenquelle angeordnet ist, wobei besonders bevorzugt der das Target aufnehmende Targetträger zusammen mit dem Target senkrecht zu den Elektronenstrahlen verschoben wird.

Eine weitere Aufgabe der Erfindung ist es, auf den verschiedenen Kreisbahnen das Target so auszugestalten, dass Messungen mit verschiedenen Beschleunigungsspannungen und damit eine Optimierung der Strahlungsintensität und Brennfleckgröße möglich ist.

Zur Lösung sieht die Erfindung vor, dass in radialer Richtung stufenförmig die Dicke und/oder das Material der Targetbeschichtung variiert wird. Hierdurch lässt sich die optimale Targetdicke für unterschiedliche Spannungen und unter ggf. Verwendung unterschiedlicher Targetbeschichtungsmaterialien realisieren. Beispielsweise kann das Target in einem eher zentralen Bereich dicker ausgebildet sein, beispielsweise zur Realisierung großer Brennflecke, und nach außen hin dünner ausgebildet sein. Die Breite der Abstufungen ist dabei auf die der entsprechenden Beschleunigungsspannung und zugeordneten Leistung zu erwarteten Brennfleckgröße abgestimmt.

Auch ist vorgesehen, dass die Dicke des Targets radial kontinuierlich oder entsprechend einer stetigen oder unstetigen Funktion variiert wird.

Insbesondere zeichnet sich die Erfindung dadurch aus, dass die Targetbeschichtung in radialer Richtung stufenweise aus unterschiedlichen Materialien wie beispielsweise Wolfram, Kupfer oder Beryllium und/oder unterschiedlicher Dicke ausgebildet ist.

Die Erfindung sieht zur Lösung auch ein Verfahren zur computertomografischen Untersuchung von Werkstücken, vorzugsweise dimensionellen Messung von Merkmalen an Werkstücken vor, umfassend zumindest die folgenden Schritte: Aufnahme zumindest eines Satzes mehrerer Durchstrahlungsbilder (Durchstrahlungsbildsatz) des auf dem Drehtisch angeordneten Werkstücks in mehreren Drehstellungen (Drehschritten) relativ zu einer Strahlungsquelle (Quelle) wie Röntgenstrahlenquelle und einem flächig ausgeprägtem Detektor wie Röntgendetektor, mit dem Detektor, Rekonstruktion eines Voxelvolumens, welches Voxel mit zugeordneten Voxelgrauwerten aufweist, aus dem Durchstrahlungsbildsatz und vorzugsweise Ermittlung von Oberflächenmesspunkten aus dem Voxelvolumen mittels Oberflächenextraktionsverfahren, mit einem Computertomografen zumindest umfassend eine zuvor beschriebene erfindungsgemäße Vorrichtung, dass sich dadurch auszeichnet, dass nacheinander unterschiedliche Auftreffpunkte des Elektronenstrahls auf dem Target (Brennfleckpositionen) eingestellt werden, die auf zumindest einer Kreisbahn liegen, indem der das Target aufnehmende Targetträger in unterschiedliche Drehstellungen gebracht wird, wobei sich vorzugsweise die unterschiedlichen Brennflecken auf dem Target nicht überlagern, bevorzugt mindestens 90, besonders bevorzugt mindestens 180 unterschiedliche Brennfleckpositionen auf dem Umfang der Kreisbahn verteilt eingestellt werden.

Die Anzahl der auf dem Umfang verteilbaren Brennfleckpositionen hängt von der eingestellten Brennfleckgröße, also der Fokussierung des Brennflecks, bedingt durch die verwendete Röhrenleistung und damit abzuführende Wärme, und dem Durchmesser der Kreisbahn, also der Exzentrizität der Einspannung des Targethalters im beispielsweise Exzenterring ab. Versetzte Kreisbahnen können durch unterschiedliche Exzenterringe oder unterschiedliche Ausrichtung des Elektronenstrahls erreicht werden.

Besonders hervorzuheben ist, dass unterschiedliche Kreisbahnen eingestellt werden, indem Exzenterringe unterschiedlicher Exzentrizität verwendet werden und/oder indem der Elektronenstrahl radial zur Drehachse, um die der Targetträger gedreht wird, an unterschiedliche Positionen gerichtet wird.

Des Weiteren zeichnet sich die Erfindung dadurch aus, dass die Einstellung einer veränderten Brennfleckposition wahlweise je Messung, je Drehstellung, je Bild bei mehreren Bildern je Drehstellung und/oder je Rasterstellung bei einer Rastertomografie erfolgt, vorzugsweise automatisch anhand der Überwachung der Betriebsstunden der Röntgenröhre und/oder einer vorgegebenen Zeitdauer und/oder anhand des Ergebnisses einer zyklisch wiederholten Messung des Verschleißes des Targets an der jeweils aktuellen Brennfleckposition, oder durch manuelles Weiterdrehen durch den Bediener.

Unter einer Rastertomografie wird verstanden, dass Ausschnitte der Abschnitte des Werkstücks nacheinander in mehreren versetzten Stellungen des Werkstücks relativ zur Quelle und dem Detektor gemessen werden, also mehrere Durchstrahlungsbildsätze aufgenommen werden.

Insbesondere zeichnet sich die Erfindung dadurch aus, dass die Verschleißmessung erfolgt durch Bestimmung der Helligkeit bzw. Intensität der abgegebenen Röntgenstrahlung und/oder durch Bestimmung des Kontrastes in zumindest einem mit dem Detektor aufgenommenen Durchstrahlungsbild bei kurzzeitiger Einstellung eines geänderten Auftreffpunktes des Elektronenstrahls auf dem Target auf einen bisher nicht benutzten Bereich des Targets.

Nach einem besonders hervorzuhebenden Vorschlag ist vorgesehen, dass die Drehstellung des Targethalters kontinuierlich erfolgt, wobei vorzugsweise zur Vermeidung von Messabweichungen durch beispielsweise Unschärfen die Drehung mit einer geringen Geschwindigkeit von vorzugsweise weniger als 50 µm pro Stunde, besonders bevorzugt weniger als 10 µm pro Stunde erfolgt.

Das kontinuierliche Weiterdrehen des Targets hat hier die Aufgabe, den Targetverschleiß zu verringern und insbesondere nicht die Aufgabe, eine Abführung der Wärme zu verbessern, um höhere Leistungen der Quelle einstellen zu können. Das Weiterdrehen erfolgt daher nur so langsam, dass eine nächste überdeckungsfreie Brennfleckposition eingestellt ist, sicher bevor der aktuell benutzte Brennfleckbereich verschlissen ist. Selbst bei sehr hoher Leistung ist dies nach frühestens etwa einer Stunde der Fall. Bei einer angenommenen Brennfleckgröße von 10 µm bis 50 µm im Durchmesser ergeben sich die zuvor angegebenen maximal notwendigen Geschwindigkeiten, die je nach Radium der Kreisbahn in eine Winkelgeschwindigkeit umzurechnen sind. Das schnelle Drehen ist zwar auch möglich, sorgt hier aber für keinen Vorteil. Das langsamere Drehen ist vorgesehen, wenn mit geringeren Röhrenleistungen gearbeitet wird. Aus den hier dargelegten Zusammenhängen kann auch die Zeitdauer für das schrittweise Weiterdrehen abgeleitet werden. Nach frühestens einer Stunde wird also um 10 µm bis 50 µm weitergedreht.

Nach einer unabhängigen Idee sieht die Erfindung auch vor, höhere Geschwindigkeiten für das Drehen des Targets einzustellen, um eine bessere Wärmeabfuhr zu ermöglichen und höhere Leistungen der Quelle einzusetzen. Hierzu muss die Dichtung aber entsprechend ausgelegt sein. Eine mögliche Lösung, die die Erfindung vorsieht, ist es, die Anpresskraft des Targetträgers an die Vakuumröhre dem Verschleiß der Dichtung nachzuführen.

Ein weiteres unabhängiges oder mit zuvor genannten Ideen kombinierbares erfinderisches Verfahren sieht vor, dass die Brennfleckposition auf einem Target, insbesondere auf einem Transmissions- oder einem Reflexionstarget schrittweise und/oder abhängig vom Verschleiß des Targets verändert wird, also insbesondere nicht kontinuierlich verändert wird.

Insbesondere zeichnet sich die Erfindung also dadurch aus, dass die Einstellung eines veränderten Auftreffpunktes des Elektronenstrahls auf dem Target einer Röntgenstrahlenquelle (Brennfleckposition), vorzugsweise einer Röntgenstrahlenquelle für einen Computertomografen zur besonders bevorzugt dimensionellen Messung von Merkmalen an Werkstücken, schrittweise und/oder nur dann erfolgt, wenn eine eingestellte Verschleißgrenze des Targets erreicht oder überschritten wird, besonders bevorzugt indem das Target oder ein das Target aufnehmender Targetträger in unterschiedliche Drehstellungen gebracht wird und/oder indem Exzenterringe unterschiedlicher Exzentrizität zur Aufnahme des Targets oder Targetträgers verwendet und gedreht werden und/oder indem der Elektronenstrahl an unterschiedliche Positionen auf dem Target gerichtet wird.

In einer besonderen Ausgestaltung der Erfindung ist auch vorgesehen, dass der Röntgenstrahlen erzeugende Bereich des Targets nicht von einem Substrat, sondern von einem in irgendeiner anderen Form ausgebildeten Halter ausgeht, oder ganz auf das Substrat verzichtet wird. Die zuvor genannten Ausführungen sind entsprechend in Kombination mit einem solchen Halter oder ohne einen Halter eigenerfinderisch als Lösung vorgesehen.

Gegenstand einer selbstständigen Erfindung ist ein Verfahren zur Korrektur von Messdaten, insbesondere eines Computertomografen.

Bekannten Verfahren zur Bestimmung und Korrektur von Messabweichungen, die bei der dimensionellen Messung oder Inspektion mit einem Computertomografen entstehen, basieren darauf, dass ein analytisches Modell des Messprozesses oder zumindest von Teilprozessen vorliegt, anhand dessen zu erwartende Abweichungen berechnet oder simuliert werden. Die berechneten oder simulierten Abweichungen werden unterschiedlich weiter verwendet. Sie dienen beispielsweise dazu, gemessene Daten zu korrigieren. Werden simulierte Daten unterschiedlicher Randbedingungen (Messbedingungen) verglichen, können diese auch dazu verwendet werden, um zu entscheiden, welche Messbedingungen später für die reale Messung verwendet werden sollten, beispielsweise, bei welcher Lage des Werkstücks geringste Streustrahlartefakte vorliegen.

Messabweichungen treten durch unterschiedliche physikalische Prozesse auf. Im Falle der Computertomografie, auf die sich die Erfindung vorrangig bezieht aber nicht beschränkt ist, sind diese beispielsweise die Schwächung und Streuung der Messstrahlung durch das zu untersuchende Werkstück. Aber auch Abweichungen des Detektors, wie Verzeichnung o. ä., Abweichungen in der Position und Winkellage von Detektor, Quelle und Werkstück bzw. das Werkstück aufnehmenden Drehtischs zueinander (hier als "Geometrie" bzw. "Geometriedaten" bezeichnet und in Form sogenannter SOUV-Vektoren in die Rekonstruktion eingehend), Abweichungen bei der Drehung des Drehtischs, Abweichungen der Lage des die Messstrahlung abgebenden Brennflecks der Quelle (hier als "Brennfleckdriftdaten" bezeichnet) und einige weitere Effekte führen zu Messabweichungen.

Die Berechnung oder Simulation dieser Messabweichungen ist mitunter ein sehr aufwändiger und zeitintensiver Prozess. Zudem müssen entsprechende analytische Modelle vorliegen. Insbesondere für das Verfahren der Computertomografie stehen Modelle, die genau genug sind, die aufgrund der verschiedenen physikalischen Prozesse, die zudem teilweise statistischer Natur sind, entstehenden Messabweichungen (Artefakte) vorauszusagen, nur teilweise zur Verfügung und sind zumeist sehr rechen- und damit zeitintensiv. Gleiches gilt aber auch für andere, insbesondere bildgebende, Messverfahren, wie beispielsweise Bildverarbeitungsverfahren, bei denen Einflüsse durch die Beleuchtung und durch die Werkstückeigenschaften, insbesondere durch die Werkstückoberfläche, zu nicht genau genug voraussagbarer Beeinflussung der Lage einer Struktur, insbesondere Kante, im mit einer Kamera ausgenommenen Bild führen.

Eine weitere Aufgabe der vorliegenden Erfindung besteht daher darin, eine genaue und schnelle Bestimmung von Abweichungen, insbesondere in Bezug auf Messdaten und/oder Simulationsdaten einer Computertomografie oder eines anderen bildgebenden Verfahrens wie der Bildverarbeitung zur Verfügung zu stellen. Auch ist es Aufgabe, die bestimmten Abweichungen zur Korrektur von gemessenen oder simulierten Daten anzuwenden. Bevorzugt ist es Aufgabe der Erfindung, die Bestimmung bzw. Korrektur ohne Vorhandensein eines analytischen Modells des jeweiligen Messprozesses bzw. Teilmessprozesses zu realisieren.

Zur Lösung sieht die Erfindung vor, dass die Bestimmung bzw. Korrektur der Abweichungen durch eine künstliche Intelligenz (KI) wie beispielsweise neuronales Netzwerk erfolgt, welches auf die zu bestimmenden und gegebenenfalls zu korrigierenden Abweichungen trainiert wird. Die KI ersetzt dadurch die analytische Berechnung oder Simulation, die zur Bestimmung und Korrektur bestimmter Abweichungen erfolgen müsste. Hierzu wird die KI auf die entsprechende Funktion trainiert, wobei eine oder eine Folge mehrerer mathematischer Operationen, hier als Filteroperationen bezeichnet, vorzugsweise jeweils Faltungen mit einem Faltungskern, bestimmt werden.

Die Erfindung ist jedoch nicht auf Faltungsbasierte Netze begrenzt, sondern es sind auch vollständig verbundene Netze vorgesehen, die nicht faltungsbasiert sind. Allgemein kann die Folge mehrerer mathematischer Operationen auch als nichtlineare Transformation bezeichnet werden. Immer wenn im Folgenden von Filteroperation oder Faltung mit einem Faltungskern die Rede ist, versteht die Erfindung darunter also auch jede nichtlineare Transformation.

Bei diesem Training werden mehrere Sätze von Quell-Daten und Ziel-Daten verwendet. Für diese wird die Filteroperation ermittelt, die diese bestmöglich ineinander überführt. Zur Beurteilung, wie gut dies gelingt, wird ein funktionaler Zusammenhang (Zielfunktion) gebildet, beispielsweise eine Kostenfunktion, deren Ergebnis ein bestimmtes Kriterium erfüllt bzw. optimiert. Die so ermittelte Filteroperation ist dann geeignet, andere gemessene oder simulierte Messdaten (hier als Ist-Daten bezeichnet) in gleicher Weise zu verändern, wie Änderungen zwischen den für das Training benutzten Quell-Daten und Ziel-Daten vorlagen. Handelte es sich beispielsweise bei den Quell-Daten um artefaktbehaftete Daten (z. B. durch Streustrahlung) und bei den Ziel-Daten um artefaktfreie oder artefaktreduzierte Daten (z. B. ohne Streustrahlung), dann werden die Ist-Daten durch Anwendung der trainierten Filteroperation um genau die Unterschiede in den Artefakten (also z. B. die Streustrahlung) korrigiert. Dieses Vorgehen kann durch entsprechendes Training aber auch umgekehrt erfolgen. Eine Filteroperation kann also auch Artefakte oder andere Effekte hinzufügen. Dies ermöglicht es beispielsweise, eine einmal trainierte Streustrahlberechnung durch Anwendung der entsprechenden Filteroperation auf unterschiedliche Werkstücklagen oder -positionen anzuwenden, ohne eine erneute aufwändige Streustrahlsimulation durchzuführen. Grundlegend ist jeder denkbare Unterschied zwischen Quell-Daten und Ziel-Daten durch eine Filteroperation abbildbar. Die KI kann bei entsprechendem Training damit jeden mathematischen Schritt in der Messkette inkl. anzuwendender Korrekturen übernehmen, die beim Training verwendeten Quell-Daten und Ziel-Daten müssen nur die entsprechenden Unterschiede aufweisen.

Als Daten (Datenart) bezeichnet werden hier gemessene oder simulierte Daten an verschiedenen Stellen in der Messkette. Bevorzugt bezieht sich die Erfindung auf Durchstrahlungsbilddaten bei der Computertomografie. Daten können aber genauso auch aus den Durchstrahlungsbilddaten rekonstruierte Volumendaten (Voxelvolumen), schichtweise Schnittbilder der Volumendaten oder aus den Volumendaten ermittelte Oberflächendaten (Oberflächenmesspunkte) bzw. daraus gebildeter Eigenschaften wie Maße an Geometrien sein. Auch die zur Ermittlung oder Verarbeitung der Daten berücksichtigten Eigenschaften bzw. Parameter des Messgerätes, beispielsweise die für die Rekonstruktion zu verwendenden Parameter, wie beispielsweise die SOUV-Vektoren oder die Detektorverzeichnung, sind hier als Daten zu verstehen. Es ist auch vorgesehen, dass die KI an mehreren Stellen der Mess- bzw. Simulationskette eingreift, also mehrere Datenarten verarbeitet.

Um beim Training Daten mit verschiedenen zu ermittelnden bzw. zu korrigierenden Abweichungen, z. B. Artefakten zu erzeugen, teilweise zu erzeugen oder eben nicht zu erzeugen, stehen verschiedene Möglichkeiten zur Verfügung. Artefaktbehaftete Messdaten können durch entsprechende Messung oder durch Simulation unter Berücksichtigung der entsprechenden Abweichungen erzeugt werden. Artefaktreduzierte Messdaten können durch abgewandelte Messungen, z. B. durch Verwendung streustrahlreduzierender Strahlblenden, erzeugt werden oder indem bei der Simulation Artefakte nur in bestimmtem Maße einbezogen werden. Artefaktfreie Messdaten lassen sich durch entsprechende Simulationen erzeugen, aber auch durch wiederum abgewandelte Messungen, beispielsweise mit anderen Messparametern, wie beispielsweise besonders hoher Integrationszeit für die Bildaufnahmen und weiteren Maßnahmen.

Die Erfindung sieht zur Lösung ein Verfahren zur Untersuchung eines oder mehrerer Werkstücke und/oder Werkstückbereiche vor, umfassend zumindest die Aufnahme, insbesondere Messung, und/oder Berechnung, insbesondere Simulation, von Ist-Daten des Werkstücks, vorzugsweise mit einem bildgebenden Verfahren wie beispielsweise Computertomografie-Verfahren oder Kamerabasierten Bildaufnahmeverfahren wie Bildverarbeitung, besonders bevorzugt Verfahren zur dimensionellen Messung von Merkmalen an Werkstücken und/oder zur Inspektion von Werkstücken, dass sich dadurch auszeichnet, dass die Ist-Daten und/oder die zur Ermittlung oder Verarbeitung der Ist-Daten berücksichtigten Eigenschaften bzw. Parameter des Messgerätes mittels einer künstlichen Intelligenz (KI) wie neuronalem Netzwerk, bevorzugt Deep Network, Convolutional Neural Network, Deep Convolutional Network, besonders bevorzugt U-Network, verarbeitet, insbesondere korrigiert werden.

Das U-Network bzw. U-Net ist eine Spezialform eines Encoder-Decoder Networks. Dieses ist nicht auf z.B. eine feste Zahl von Stufen in dem Netz beschränkt und erfindungsgemäß ebenso vorgesehen.

Insbesondere zeichnet sich die Erfindung dadurch aus, dass die KI bzw. das neuronale Netzwerk zur Verarbeitung bzw. Korrektur der Ist-Daten oder zur Erzeugung der für die Korrektur benötigen Korrektur-Daten eine mathematische Operation oder eine Verkettung von mathematischen Operationen ist, besonders bevorzugt eine Filteroperation ist, die eine einzelne Filteroperation oder eine feste oder variable Folge von mehreren festen oder variablen Filteroperationen enthält, wobei die mathematische Operation aus vorherigem oder laufend ergänztem Training der KI, insbesondere eines neuronalen Netzes resultiert, und wobei zumindest eine, bevorzugt jede Filteroperation vorzugsweise eine Faltung mit einem Faltungskern beinhaltet.

Bevorzugterweise ist vorgesehen, dass das neuronale Netz trainiert wird, indem aufgenommene oder simulierte Quell-Daten und aufgenommene oder simulierte Soll-Daten (Ziel-Daten) in einen funktionalen Zusammenhang gebracht werden, wobei durch die Zielfunktion insbesondere ein Kriterium optimiert wird, wobei vorzugsweise die in den Zusammenhang zu bringenden Daten auf das gleiche oder identische Werkstück oder kalibrierte Werkstück und/oder auf identische Parameter des Messgerätes, insbesondere Aufnahmeparameter eines Computertomografen wie beispielsweise Abbildungsmaßstab bzw. Geometrie und/oder Spannung und/oder Strom und/oder Spektrum der Quelle und/oder Trajektorie der Bewegung zwischen Werkstücks, Quelle und Detektor und/oder Anzahl der Drehschritte und/oder Bildaufnahmezeit je Bild und/oder Anzahl der je Drehschritt überlagerten Bilder bezogen sind.

Das Kriterium kann sein, eine zu minimierende Abweichung zwischen korrigierten Quell- und den Ziel-Daten.

Insbesondere ist vorgesehen, dass in den Zusammenhang zu bringende Daten sich auf das gleiche Werkstück beziehen, wobei insbesondere Ziel-Daten auf Solldaten wie CAD-Daten basieren und Quell-Daten auf Solldaten oder auf Messdaten einer realen Messung, beispielsweise Computertomografie beruhen. Hierbei werden besonders bevorzugt für die Simulation die Aufnahmeparameter verwendet, die für die Messung bekannt sind. Dies können die Soll-Aufnahmeparameter sein, aber auch teilweise Ist-Aufnahmeparameter, insofern diese bestimmt werden.

Insbesondere zeichnet sich die Erfindung dadurch aus, dass Ist-Daten, Quell-Daten und Ziel-Daten einer der folgenden Datenarten oder einer mathematischen Verknüpfung mehrerer dieser, vorzugsweise Differenz mehrerer dieser, entsprechen:
- einer oder mehrere Sätze mittels Computertomografie erzeugter oder simulierter Durchstrahlungsbilder (Durchstrahlungsbildsatz oder Ist-Durchstrahlungsbildsatz), insbesondere unter Verwendung der aus den Durchstrahlungsbildern ermittelten Grauwerte, Projektionswerte P (normierte und logarithmierte Grauwerte der Durchstrahlungsbilder), Durchstrahlungsbildwerte e^-P oder P * e^-P,
- aus Durchstrahlungsbildsätzen rekonstruierte Voxelvolumen, insbesondere aus Ist-Durchstrahlungsbildsätzen rekonstruierte Ist-Voxelvolumen,
- aus Voxelvolumen durch schichtweises Schneiden erzeugte Schnittbilddatensätze, insbesondere aus Ist-Voxelvolumen durch schichtweises Schneiden erzeugte Ist-Schnittbilddatensätze,
- aus Voxelvolumen mittels Oberflächenextraktionsverfahren erzeugte Oberflächenmesspunkte, insbesondere aus Ist-Voxelvolumen mittels Oberflächenextraktionsverfahren erzeugte Oberflächenmesspunkte (Ist-Oberflächenpunkte),
- Mittels zumindest einer Kamera aufgenommener Bilder (Ist-Bild) im Durchlicht und/oder Auflicht, insbesondere Hellfeldauflicht und/oder Dunkelfeldauflicht,
- Messparameter des Messgerätes, insbesondere eines Computertomografen wie beispielsweise Detektorverzeichnungskorrekturdaten, Geometriedaten (SOUV-Vektoren), Drehtischdaten und/oder Brennfleckdriftdaten,
wobei bevorzugt die KI eine oder mehrere Datenarten verarbeitet, insbesondere Korrekturen nacheinander an mehreren Datenarten der gleichen Messung oder Simulation vornimmt.

Bei den Projektionswerten P handelt es sich um die Schwächung, die sich aus der durchstrahlten Länge L und dem Schwächungskoeffizienten µ ergibt. P wird aus den Grauwerten des Durchstrahlungsbildes durch Normierung und Logarithmierung ermittelt. Um eine normierte Intensität handelt es sich bei dem hier als Durchstrahlungsbildwert bezeichneten Term e^-P. Als ein besonders geeigneter Schätzer fürs forward scatter wird bevorzugt P * e^-P verwendet.

Ein weiterer Teil der Erfindung beinhaltet, dass die Ziel-Daten durch die Differenz einer Messung zu einer Simulation ohne Berücksichtigung gewisser Artefakte gewonnen werden, zum Beispiel durch eine mono- und/oder polychromatische Simulation der Durchstrahlungsbilder anhand eines CAD-Modells oder einer computertomografischen Messung des Objekts. Diese Differenz soll wahlweise tiefpassgefiltert werden, um die gezielte Korrektur niederfrequenter Artefakte zu ermöglichen. Hierdurch wird eine Schätzung für störende Artefakte erzielt, die von den artefaktbehafteten Ist-Daten abgezogen werden kann, um einen artefaktkorrigierten Datensatz zu erhalten.

Die Erfindung hat den Anspruch, diese Ziel-Daten direkt zur Korrektur zu verwenden, oder wahlweise eine künstliche Intelligenz auf diese Zieldaten zu trainieren.

Erfindungsgemäß hervorzuheben ist hierbei auch, dass sich die zum Training des neuronalen Netzes verwendeten Quell-Daten einem Bilderstapel von Durchstrahlungsbildern unterschiedlicher Drehstellungen entsprechen, um zur korrekten Abbildung auf die Soll-Daten Informationen aus anderen Drehstellungen zur Verfügung zu haben, wie dies hier später auch noch unter dem Begriff Subset genauer erläutert wird.

Die hier beschriebene Korrektur durch die KI ist erfindungsgemäß auch als Vorkorrektur vor dem Zusammenführen von zumindest zwei Ist-Datensätzen vorgesehen. Bevorzugt ist hier die Zusammenführung von Ist-Datensätzen gemeint, die mit unterschiedlichen Beleuchtungen, insbesondere unterschiedlichen Belichtungsstärken bei einem Kamerabasierten Bildaufnahmeverfahren oder unterschiedlichen Röntgenspektren bei einem Computertomografie-Verfahren, aufgenommen worden, wie dies später noch ausführlicher beschrieben wird.

Des Weiteren beinhaltet die Erfindung also ausdrücklich die separate Korrektur (Vorkorrektur) der einzelnen Datensätze (Ist-Datensätze) unterschiedlichen Spektrums mittels der zuvor oder folgend genannten Methoden, vorzugsweise der Korrektur von Streustrahlartefakten, bevor diese Datensätze zu einem Datensatz fusioniert (zusammengeführt) werden. Auf diese Weise werden artefaktvorkorrigierte Daten zusammengeführt, was eine Verringerung der Artefakte im fusionierten Datensatz bedeutet.

Die Vorkorrektur ist jedoch nicht auf diese Art der Zusammenführung beschränkt, sondern beispielsweise auch vorgesehen für andere zumeist bekannte Artefaktkorrekturverfahren wie die empirische kennlinienbasierte Artefaktkorrektur, die vor allem Strahlaufhärtung korrigiert, oder auf Monte Carlo - Simulationen basierende Artefaktkorrekturen von beispielsweise Streustrahlung.

Bevorzugterweise sieht die Erfindung vor, dass beim jeweiligen Training und bei der zugeordneten Korrektur jeweils die Quell-, Ziel- und Ist-Daten Daten gleicher Datenart sind.

Hervorzuheben ist des Weiteren, dass zuvor beschriebene Verfahren angewendet werden zur computertomografischen Untersuchung eines oder mehrerer Werkstücke und/oder Werkstückbereiche, umfassend zumindest die folgenden Schritte: Aufnahme zumindest eines ersten Satzes mehrerer Durchstrahlungsbilder (Ist-Durchstrahlungsbildsatz) des auf einem Drehtisch angeordneten Werkstücks in mehreren Drehstellungen (Drehschritten) relativ zu einer Strahlungsquelle (Quelle) wie Röntgenstrahlenquelle und zumindest einem Detektor, bevorzugt flächig ausgeprägtem Detektor wie Röntgendetektor, mit dem Detektor, Rekonstruktion eines Voxelvolumens (Ist-Voxelvolumen), welches Voxel mit zugeordneten Voxelgrauwerten aufweist, aus einem Satz Durchstrahlungsbilder, vorzugsweise Ermittlung von Oberflächenmesspunkten (Ist-Oberflächenpunkte) aus dem Voxelvolumen mittels Oberflächenextraktionsverfahren, wobei aus der Messung resultierende Ist-Daten, besonders bevorzugt ein Ist-Durchstrahlungsbildsatz und/oder Ist-Voxelvolumen und/oder Ist-Oberflächenpunkte, und/oder Eigenschaften bzw. Parameter des Computertomografen, bevorzugt die Geometrie und/oder Detektor-Verzeichnung, mittels der künstlichen Intelligenz korrigiert werden.

Die Erfindung zeichnet sich auch dadurch aus, dass zuvor beschriebene Verfahren angewendet werden zur computertomografischen Untersuchung eines oder mehrerer Werkstücke und/oder Werkstückbereiche, umfassend zumindest die folgenden Schritte: Simulation zumindest eines ersten Satzes mehrerer Durchstrahlungsbilder (Ist-Durchstrahlungsbildsatz) des auf einem Drehtisch angeordneten Werkstücks in mehreren Drehstellungen (Drehschritten) relativ zu einer Strahlungsquelle (Quelle) wie Röntgenstrahlenquelle und zumindest einem Detektor, bevorzugt flächig ausgeprägtem Detektor wie Röntgendetektor, mit dem Detektor, vorzugsweise Rekonstruktion eines Voxelvolumens (Ist-Voxelvolumen), welches Voxel mit zugeordneten Voxelgrauwerten aufweist, aus einem Satz Durchstrahlungsbilder, vorzugsweise Ermittlung von Oberflächenmesspunkten (Ist-Oberflächenpunkte) aus dem Voxelvolumen mittels Oberflächenextraktionsverfahren, wobei aus der Simulation resultierende Ist-Daten, besonders bevorzugt ein Ist-Durchstrahlungsbildsatz und/oder Ist-Voxelvolumen und/oder Ist-Oberflächenpunkte, und/oder Eigenschaften bzw. Parameter des Computertomografen bei der Simulation, bevorzugt die Geometrie und/oder Detektor-Verzeichnung, mittels der künstlichen Intelligenz korrigiert werden.

Insbesondere zeichnet sich die Erfindung dadurch aus, dass Quell-Daten, insbesondere Quell-Durchstrahlungsbildsatz, und Ziel-Daten, insbesondere Ziel-Durchstrahlungsbildsatz, jeweils durch Messung, also Durchstrahlung des Werkstücks aufgenommen und/oder durch Simulation der Durchstrahlung des Werkstücks erzeugt werden, vorzugsweise als Ziel-Daten die tiefpassgefilterte Differenz aus simulierter Vorwärtsprojektion des Werkstücks und der Messung des Werkstücks verwendet werden.

In einer besonders bevorzugt vorgesehenen Ausgestaltung sieht die Erfindung auch vor, dass das Training auf die tiefpassgefilterte Differenz aus simulierter Vorwärtsprojektion des Werkstücks und der Messung des Werkstücks erfolgt, diese tiefpassgefilterte Differenz also die Soll-Daten bzw. Ziel-Daten darstellen.

Nach einem besonders hervorzuhebenden Vorschlag ist vorgesehen, dass für die Simulation die geometrische Beschreibung des Werkstücks, insbesondere Solldaten wie bevorzugt CAD-Daten und/oder Ist-Daten aus der Messung des Werkstücks insbesondere eines Meisterteils und/oder Kalibrierdaten des Werkstücks, zugrunde gelegt wird.

Besonders hervorzuheben ist, dass die Messung und die Simulation jeweils mit vollständiger (artefaktbehafteter), teilweiser (artefaktreduzierter) oder ohne (artefaktfreier oder artefaktkorrigierter) Berücksichtigung eines oder mehrerer Artefakte erfolgt, insbesondere jeweils einige Artefakte berücksichtigt, oder teilweise berücksichtigt, und andere Artefakte nicht berücksichtigt werden.

Des Weiteren zeichnet sich die Erfindung dadurch aus, dass Messung und/oder Simulation zunächst ohne bestimmte Artefakte erfolgt und bestimmte Artefakte zusätzlich vollständig oder teilweise durch mathematische Verfahren, wie beispielsweise eine gesonderte Streustrahlsimulation, hinzugefügt werden oder dass Messung und/oder Simulation bestimmte Artefakte bereits teilweise oder vollständig enthält.

Insbesondere zeichnet sich die Erfindung dadurch aus, dass das Hinzufügen von Artefakten erfolgt durch Simulation wie beispielsweise Streustrahlsimulation nach bevorzugt einer Monte-Carlo-Methode, oder aus einer gesonderten Messung, beispielsweise der Streustrahlung, oder durch Messung, die Artefakte bereits enthält.

Bei der Simulation kann leicht variiert werden, inwiefern und ob bestimmte Artefakte berücksichtigt werden, indem die entsprechenden Artefakte in die Simulation einbezogen werden oder nicht. Bei den Messungen im Rahmen des Trainings kann der Einfluss zumindest einiger Artefakte vermieden oder zumindest reduziert werden, indem spezielle Messungen durchgeführt oder spezielle Messparameter verwendet werden. Im Vergleich zur später zu korrigierenden Messung können beim Training Messungen vorgenommen werden, die zu geringeren Artefakten führen, wie beispielsweise:
- Messung unter Verwendung einer oder mehrerer Schlitzblenden oder Streustrahlgitter
- Messung mit verändertem Strahlfilter
- Messung mit höherer Bildaufnahmezeit (Integrationszeit)
- Mehrspektren-Tomografie mit unterschiedlichen Strahlspektren
- Anwendung einer anderen Artefaktkorrekturmethode.

Diese artefaktreduzierten Messdaten oder artefaktfreie oder artefaktreduzierte Simulationsdaten können im Rahmen des Trainings als Ziel-Daten, z. B. Ziel-Durchstrahlungsbildsätze verwendet werden, wobei artefaktbehaftete Mess- oder Simulationsdaten als Quell-Daten, z. B. Quell-Durchstrahlungsbildsätze verwendet werden. Es ist auch vorgesehen, dass in den Ziel-Daten wie Ziel-Durchstrahlungsbildsatz gezielt bestimmte Artefakte noch enthalten sind, so dass die trainierte Filteroperation nur ausgewählte Artefakte korrigiert, andere aber belässt. Verallgemeinert wird auf diese Weise jeweils eine Filteroperation trainiert, die an den zu korrigierenden Ist-Daten wie Ist-Durchstrahlungsbildsatz später die Artefakte bzw. allgemeiner Messabweichungen in der Ausprägung korrigiert, wie diese zwischen Quell- und Ziel-Daten unterschiedlich sind.

So kann also beispielsweise eine aufwändige Streustrahlsimulation, einmal trainiert, bei der späteren eigentlichen Messung des Werkstücks durch eine Filteroperation des neuronalen Netzwerks ersetzt werden. Ein weiteres Beispiel ist, dass bei der späteren Messung bewusst Artefakte in Kauf genommen werden, beispielsweise durch Weglassen des Streustrahlgitters, andere Strahlfilter, geringere Bildaufnahmezeit und/oder einmalige Tomografie mit nur einem Strahlspektrum, und diese durch eine entsprechend trainierte Filteroperation korrigiert werden.

Bevorzugterweise ist vorgesehen, dass artefaktfreie oder artefaktreduzierte Messung im Vergleich zur Aufnahme der Ist-Daten wie Ist-Durchstrahlungsbildsatzes erfolgt durch:
- Messung unter Verwendung einer oder mehrerer Schlitzblenden oder Streustrahlgitter,
- Messung mit verändertem Strahlfilter,
- Messung mit höherer Bildaufnahmezeit,
- Mehrspektren-Tomografie mit unterschiedlichen Strahlspektren und/oder
- Anwendung einer anderen Artefaktkorrekturmethode.

Durch das Training mit unterschiedlichen Strahlspektren wird es möglich, für die später zu korrigierenden Ist-Daten das bei der Erzeugung dieser verwendete Strahlspektrum zu schätzen und daraufhin zu korrigierende Artefakte vorherzusagen. Es entsteht dadurch ein vom geschätzten Strahlspektrum abhängiger Filteroperation.

Aus der Kenntnis und/oder Schätzung des verwendeten Spektrums unter Hinzunahme der erwarteten Geometrie des Werkstücks, beispielsweise bekannt anhand der Soll-Daten des Werkstücks), lassen sich die zu erwartenden Artefakte zumindest grob abschätzen. Hierbei kann darauf geschlussfolgert werden, ob es sich um hochfrequente Artefakte wie beispielsweise Strahlaufhärtung handelt, die deutlicher in den rekonstruierten Volumendaten sichtbar ist, oder um niederfrequente Artefakte wie beispielsweise Streustrahlung, die unter Umständen aber nicht immer deutlicher in den Durchstrahlungsbilddaten sichtbar sind. Daraufhin werden Filteroperationen für die Korrektur angewendet, die entsprechend an Volumendaten oder Durchstrahlungsbilddaten trainiert wurden.

Insbesondere zeichnet sich die Erfindung dadurch aus, dass beim Training die Beziehungen, insbesondere Raumlage, zwischen Durchstrahlungsbildern unterschiedlicher Drehstellungen berücksichtigt werden, also vorzugsweise Korrektur in benachbarten Drehstellungen aufgenommener Durchstrahlungsbilder homogenisiert bzw. geglättet werden.

Hervorzuheben ist hierbei auch, dass die zum Training des neuronalen Netzes verwendeten Quell-Daten einem Bilderstapel von Durchstrahlungsbildern unterschiedlicher Drehstellungen entsprechen, um zur korrekten Abbildung auf die Soll-Daten Informationen aus anderen Drehstellungen zur Verfügung zu haben. Dies wird weiter unten auch im Zusammenhang mit Subsets näher erläuert.

Bevorzugterweise sieht die Erfindung vor, dass beim Training mehrere Simulationen erfolgen, wobei einer oder mehrere der folgenden Parameter variiert werden:
- Einbezogene Artefakte, wie beispielsweise Streustrahlung, Strahlaufhärtung, Off-Focal - Strahlung, Rückstreuung vom Detektor bzw. Gehäuse (backscatter), Photon Starvation, Rauschen, Drift des die Röntgenstrahlung erzeugenden Brennflecks und/oder Bildstörungen aus Fehlkalibrierungen des Computertomografen und/oder Abweichungen des Detektors wie Bad-Pixel, Verzeichnung, Verkippung, Nichtlinearitäten und/oder Sensitivitätsschwankungen, usw.,
- Ausrichtung und Lage des Werkstücks zwischen Quelle und Detektor, insbesondere Abbildungsmaßstab, und/oder Ausrichtung und/oder Lage von Quelle und Detektor (Geometrie) und/oder
- Trajektorie für die Relativbewegungen zwischen Quelle, Detektor und Werkstück und/oder
- Verwendete Aufnahmeparameter wie die Spannung, der Strom und/oder das Spektrum der Quelle, Anzahl der Drehschritte, Bildaufnahmezeit je Bild und/oder Anzahl der je Drehschritt überlagerten Bilder.

Hervorzuheben ist des Weiteren, dass für das Training des neuronalen Netzwerks ein Werkstück, vorzugsweise kalibriertes Werkstück verwendet wird, wobei eine Filteroperation ermittelt wird, die zur Bestimmung der jeweils vorliegenden Lage von Quelle, Werkstück und Detektor zueinander und/oder des jeweils vorliegenden Abbildungsmaßstabs, insbesondere der Geometrie geeignet ist.

Die Erfindung zeichnet sich auch dadurch aus, dass als der zu korrigierende Ist-Durchstrahlungsbildsatz der Satz aufgenommener Durchstrahlungsbilder (Grauwerte) oder daraus normierter Durchstrahlungsbilder oder daraus normierter und logarithmierter Durchstrahlungsbilder (Projektionswerte P) oder Durchstrahlungsbildwerte e^-P oder P * e^-P verwendet wird.

Insbesondere zeichnet sich die Erfindung dadurch aus, dass bei der Korrektur aus mehreren Filteroperatoren ein Filteroperator ausgewählt wird unter Berücksichtigung eines oder mehrerer der folgenden Parameter:
- Spannung und/oder Strom und/oder Spektrum der Quelle,
- vor der Quelle angeordneter Strahlfilter,
- Abbildungsmaßstab,
- Anzahl der Drehschritte,
- Bildaufnahmezeit je Bild,
- Anzahl der je Drehschritt überlagerten Bilder,
- Relativlage von Quelle und Detektor zueinander, insbesondere Geometrie und/oder
- Trajektorie der Bewegung von Werkstück, Quelle und Detektor zueinander.

Nach einem besonders hervorzuhebenden Vorschlag ist vorgesehen, dass das Verfahren zur dimensionellen Messung von Merkmalen an den Werkstücken durch Ermittlung von Oberflächenmesspunkten aus dem Voxelvolumen mittels Oberflächenextraktionsverfahren und/oder zur Inspektion von Werkstücken, insbesondere dem Werkstückinneren auf beispielsweise Lunker, Einschlüsse oder ähnliches angewendet wird.

Besonders hervorzuheben ist, dass die Korrektur zur Verringerung von Messabweichungen bei der Computertomografie und vorzugsweise Verringerung der Messunsicherheit dimensioneller Maße an Merkmalen verwendet wird, wobei insbesondere Abweichungen korrigiert werden resultierend aus Streustrahlung, Strahlaufhärtung, Off-Focal - Strahlung, Rückstreuung vom Detektor bzw. Gehäuse (backscatter), Photon Starvation, Rauschen, Drift des die Röntgenstrahlung erzeugenden Brennflecks und/oder aus Bildstörungen wie beispielsweise resultierend aus Fehlkalibrierungen des Computertomografen und/oder Abweichungen des Detektors wie Bad-Pixel, Verzeichnung, Verkippung, Nichtlinearitäten und/oder Sensitivitätsschwankungen, vorzugsweise indem die jeweils zu korrigierenden Abweichungen beim Training des neuronalen Netzwerks einbezogen werden, indem besonders bevorzugt die zu berücksichtigenden Abweichungen bei der Erzeugung der Quell-Daten wie Quell-Durchstrahlungsbildsätze berücksichtigt und bei der Erzeugung der Ziel-Daten wie Ziel-Durchstrahlungsbildsätze nicht berücksichtigt werden.

Des Weiteren zeichnet sich die Erfindung dadurch aus, dass das Verfahren in einem Computertomografen eingesetzt wird, der in einem Koordinatenmessgerät integriert betrieben wird, wobei das Koordinatenmessgerät vorzugsweise weitere taktile, optische und/oder taktil-optische Sensoren aufweist und zum Betrieb dieser in Sinne eines Multisensorkoordinatenmessgerätes ausgebildet ist.

Insbesondere zeichnet sich die Erfindung dadurch aus, dass das neuronale Netz so trainiert wird, dass mathematische Operation (Filteroperation) keine Größenänderung (Skalierung) bewirkt und/oder Skalierung durch eine separate Filteroperation kompensiert wird, vorzugsweise indem beim Training durch Computertomografie eines kalibrierten Werkstücks erzeugte Quell-Daten und auf Basis der Kalibrierdaten erzeugtes Modell für die Simulation von Ziel-Daten verwendet werden, besonders bevorzugt indem der Filteroperator zur Kompensierung bestimmt wird, indem Skalierungsfaktor zwischen gemessenen und simulierten Daten des identischen Werkstücks bestimmt wird.

Die Vermeidung von Größenänderungen bedeutet, dass der bei der Auswertung und Korrektur der Messdaten zugrundeliegende Abbildungsmaßstab des Computertomografen nicht indirekt dadurch verändert wird, dass bei der Korrektur durch die KI beispielsweise Durchstrahlungsbilder bzw. Teile davon als Ganzes vergrößert oder verkleinert werden. Dies ist notwendig, damit die zu bestimmenden Dimensionen des Werkstücks richtig gemessen werden. Die KI darf die zu korrigierenden Daten also nicht skalieren. Vielmehr soll die KI lokale Bildstörungen bzw. Artefakte verschiedenster Art an sich korrigieren.

Hierbei kann es jedoch zu Problemen kommen, wenn beim Training Daten gegenübergestellt werden, die einer wenn auch nur leicht unterschiedlichen Skalierung entsprechen. Dies kann der Fall sein, wenn mittels Computertomografie gemessene Quell-Daten und auf einem CAD-Modell basierende Soll-Daten für die Simulation von Ziel-Daten verwendet werden. Die Soll-Daten können unter Umständen eine vom realen, zu messenden, Werkstück abweichende Gesamtausdehnung aufweisen, das Werkstück kann beispielsweise aufgrund des Herstellungsprozesses geschrumpft sein. Ein Training mit solchen Daten würde dazu führen, dass die KI eine Filteroperation zur Skalieren antrainiert bekommen würde. Zur Vermeidung dieses meist ungewollten Effekts sieht die Erfindung vor, dass anstatt der reinen Soll-Daten aus dem CAD-Modell o. ä. als Ausgangsdaten für die Simulation ein Modell verwendet wird, dass der realen Größe des Werkstücks entspricht, also in Bezug auf die mittels Computertomografie gemessenen Quell-Daten identisch skaliert ist. Dieses Modell muss also die realen Werkstückabmessungen aufweisen, die durch Kalibrierung des Werkstücks, also Messung mit einem anderen Messsystem oder -verfahren, erhalten werden können. Dieses Modell wird dann für die Simulation, insbesondere Vorwärtsprojektion, der Ziel-Daten verwendet. Hierbei sollte der Abbildungsmaßstab, der für die Rekonstruktion der gemessenen CT-Daten verwendet wird, möglichst genau bekannt sein. Anderenfalls würden die entstehenden Quell-Daten eine im Vergleich zu den auf Basis von Kalibrierwerten simulierten Ziel-Daten unterschiedliche Skalierung aufweisen, die der KI antrainiert werden würde.

Sollten dennoch während der computertomografischen Messung Artefakte auftreten, die einen Skalierungsfehler in den Messwerten auslösen, so würde die KI dennoch eine Skalierung antrainiert bekommen. Diese wäre dann aber eine korrekte Korrektur, da das zu korrigierende Artefakt offensichtlich eine die Messung verfälschende Skalierung vornimmt. Sind solche Artefakte einmal bekannt oder zu erwarten, kann also ein entsprechendes Training erfolgen. Hierbei können auch Simulationen ohne und mit Berücksichtigung dieses Artefakts eingesetzt werden, wodurch der durch diesen Artefakt ausgelöste Effekt durch Vergleich dieser beiden Simulationen erkannt und die KI für die entsprechende Korrektur trainiert wird. Der Vergleich der Simulationen ist im Übrigen auch geeignet, festzustellen, ob bei der computertomografischen Messung des Werkstücks genau dieses skalierende Artefakt vorlag (im Falle von Trainingsdaten) bzw. zu erwarten ist (im Falle von zu korrigierenden Ist-Daten) und infolgedessen kann die KI entscheiden, ob eine entsprechende Korrektur trainiert (im Falle von Trainingsdaten) bzw. notwendig (im Falle von zu korrigierenden Ist-Daten) ist.

Insbesondere zeichnet sich die Erfindung dadurch aus, dass eine sogenannte Wasserscheidenmethode für das Oberflächenextraktionsverfahren zur Erzeugung der Oberflächenpunkte und/oder zur Erzeugung von Messpunkten an Materialübergängen des Werkstücks und/oder zur Segmentierung der Volumendaten (Voxelvolumen), vorzugsweise zur voxelgenauen oder subvoxelgenauen Erzeugung von Oberflächenpunkte oder Messpunkten an Materialübergängen, eingesetzt wird, insbesondere beim Training der KI eingesetzt wird.

Bei der sogenannten, auch aus der 2D-Bildverarbeitung bekannten, Wasserscheidenmethode werden die Grauwerte der Voxel im 3D-Voxelvolumen als Höhendaten interpretiert und diese Höhendaten virtuell von unten her aufgefüllt, um Scheidenpunkte zu finden und/oder eine Segmentierung vorzunehmen. Auf diese Weise lassen sich Oberflächenübergänge zum Umgebungsmedium (meist Luft) oder zu anderen Materialien (im Fall von Multi-Material-Werkstücken) effektiv finden und/oder lokale Bereiche der unterschiedlichen Materialien unterscheiden. Die Methode arbeitet zunächst voxelgenau, kann aber auch als Zwischenschritt zu einer anschließenden subvoxelgenauen Oberflächenextraktionsmethode verwendet werden.

Nach einem besonders hervorzuhebenden Vorschlag ist vorgesehen, dass eine Segmentierung von Gebieten, insbesondere der unterschiedlichen Materialien des Werkstücks anhand der Volumendaten (Voxelvolumen) erfolgt, insbesondere wobei jedem Voxel ein Material zugewiesen wird oder den Materialien jeweils eine Liste der zugehörigen Voxel zugewiesen wird, wobei vorzugsweise anschließend mittels Kantenortsfindung die Oberflächenpunkte und/oder Messpunkte an Materialübergängen des Werkstücks bestimmt werden, wobei besonders bevorzugt für das Training der KI Ziel-Daten in Form von Volumendaten (Ziel-Volumendaten) und/oder Ziel-Daten in Form von Oberflächenpunkten (Ziel-Oberflächendaten), oder im Falle eines Multi-Material-Werkstücks Ziel-Volumendaten und/oder Ziel-Oberflächendaten je Material verwendet werden.

Die Segmentierung erlaubt insbesondere eine schnelle Ermittlung von Materialübergängen bei Multi-Material-Werkstücken und kann beispielsweise mit der zuvor genannten Wasserscheidenmethode umgesetzt werden. Sie kann für das Training der KI eingesetzt werden.

Insbesondere zeichnet sich die Erfindung auch durch eine eigenerfinderische oder mit zuvor genannten Ideen kombinierbare Idee aus, die vorsieht, dass die KI durch entsprechendes Training einen oder beide der Schritte Rekonstruktion und Oberflächenfindung realisiert, wobei die KI
- aus dem Ist-Durchstrahlungsbildsatzes das Ist-Voxelvolumen berechnet oder
- aus dem Ist-Voxelvolumen die Ist-Oberflächenpunkte berechnet oder
- aus dem Ist-Durchstrahlungsbildsatzes die Ist-Oberflächenpunkte berechnet oder
- aus dem Ist-Durchstrahlungsbildsatzes und dem Ist-Voxelvolumen die Ist-Oberflächenpunkte berechnet,
   wobei beim entsprechenden Training der KI die jeweils korrespondierenden Quell-Daten und Ziel-Daten verwendet werden, die unterschiedlicher Datenart entsprechen, und zwar
- als Quell-Daten Durchstrahlungsbildsätze und als Ziel-Daten Voxelvolumen oder
- als Quell-Daten Voxelvolumen und als Ziel-Daten Oberflächenpunkte oder
- als Quell-Daten Durchstrahlungsbildsätze und als Ziel-Daten Oberflächenpunkte oder
- als Quell-Daten ein Durchstrahlungsbildsätze und Voxelvolumen und als Ziel-Daten Oberflächenpunkte.

Durch diese Idee übernimmt die KI also nicht oder nicht nur die antrainierte Korrektur an einer der Datenarten, sondern einen oder beide der klassischen Schritte Rekonstruktion von Durchstrahlungsbilddaten (Durchstrahlungsbildsatz) zu Voxelvolumen und/oder Oberflächenfindung der Oberflächenpunkte aus den Voxelvolumen. Ein entsprechendes Training muss also mit Quell- und Ziel-Daten erfolgen, die sich in den durch die KI zu übernehmenden Schritte unterscheiden. In einer Ausgestaltung ist auch vorgesehen, dass die KI für die Berechnung der Oberflächendaten Durchstrahlungsbilddaten und Voxelvolumen, insbesondere rekonstruierte Ist-Voxelvolumen heranzieht.

Des Weiteren zeichnet sich die Erfindung dadurch aus, dass die KI durch entsprechendes Training die Zusammenführung von zumindest zwei Ist-Datensätzen zu einem zusammengeführten Ist-Datensatz zur weiteren Verarbeitung realisiert, wobei die Ist-Datensätze mit unterschiedlichen Beleuchtungen, insbesondere unterschiedlichen Belichtungsstärken bei einem Kamerabasierten Bildaufnahmeverfahren oder unterschiedlichen Röntgenspektren bei einem Computertomografie-Verfahren, aufgenommen wurden, wobei vorzugsweise vor der Zusammenführung der Ist-Datensätze diese mittels der KI korrigiert (vorkorrigiert) werden.

Die Aufnahme von Ist-Daten bei unterschiedlichen Beleuchtungen ist bei unkooperativen Werkstückoberflächen (für den Fall Kamerabasierter Bildaufnahmeverfahren) bzw. Mehrmaterial-Werkstücken (für den Fall Computertomografie-Verfahren) meist notwendig, um eine hohe Abbildungsqualität zu erreichen und genau messen zu können. Im Bereich Bildverarbeitung wird beispielsweise das HDR-Verfahren eingesetzt. Im Bereich Computertomografie-Verfahren werden zumindest zwei Messungen mit unterschiedlichen Spektren durchgeführt und die Ergebnisse kombiniert (fusioniert). Die unterschiedlichen Spektren können durch Betreiben derselben Röntgenröhre mit unterschiedlicher Energie oder durch Verwendung mehrerer Röntgenröhren erzeugt werden. Die DE102016104582 der Anmelderin beschreibt dazu einen Computertomografen mit zwei Röntgenröhren mit unterschiedlichen Spektren für die Messung von Multimaterial-Werkstücken.

Für die notwendige Zusammenführung der bei unterschiedlichen Beleuchtungen aufgenommenen Ist-Daten ist eine Datenfusion notwendig. Diese Datenfusion umfasst für den Fall der erfindungsgemäßen Computertomografie-Verfahren die Berücksichtigung der in den Durchstrahlungsbildern gemessenen Intensitäten und/oder des jeweils verwendeten Spektrums der einzelnen Ist-Datensätze und eine darauf basierende Normierung bzw. Skalierung der Ist-Daten, insbesondere Durchstrahlungsbild-Daten, und anschließender Zusammenführung der Daten zu einem Ist-Datensatz. Erfindungsgemäß werden einige oder alle diese Schritte durch die KI realisiert. Das dafür notwendige Training erfolgt anhand von Trainingsdaten, die mit den bekannten Fusions-Verfahren erzeugt werden.

Wie bereits zuvor erwähnt sieht die Erfindung auch vor, dass die Ist-Daten vor dem Zusammenführen mittels der zuvor und folgend genannten Methoden durch die KI vorkorrigiert werden.

Nach einem besonders hervorzuhebendem Vorschlag zeichnet sich die Erfindung auch dadurch aus, dass das Training der KI, insbesondere des neuronalen Netzes, laufend ergänzt insbesondere verbessert wird durch Messdaten, insbesondere bei Anwendern bzw. Endanwendern generierten Messdaten, von Werkstücken, wobei vorzugsweise Anwenderdaten und/oder bereits vorhandene Trainingsdaten über eine vorzugsweise verschlüsselte Datenverbindung ausgetauscht werden, besonders bevorzugt Anwenderdaten zur Verbesserung eines in einer Cloud bzw. auf einem Server gespeicherten Netzes an diesen vorzugsweise verschlüsselt übermittelt werden und bevorzugt verbessertes Netz an den Anwender übermittelt wird.

Hintergrund der Verschlüsselung ist die Entpersonalisierung der Trainingsdaten aus Gründen der Geheimhaltung der Kundendaten. Auf Daten, die in dem Test-/Validierungsdatenbestand (vorhandene Trainingsdaten) in beispielsweise einer Cloud oder einem Server des z. B. Herstellers enthalten sind, muss während des ergänzenden Trainings zugegriffen werden, um Overfitting zu vermeiden. Hier bietet sich eine Standardverschlüsselung an. Die verbesserten trainierten Netze, die der Nutzer aus der Cloud bzw. von einem Server zurück erhält sind bzgl. Geheimhaltung unproblematisch. Es können aus ihnen keine Informationen zu den Ursprungstrainingsdaten zurückerlangt werden. Alternativ können die vorhandenen Trainingsdaten aus der Cloud ggf. verschlüsselt in den physischen Speicher des Anwenders geladen und dort ergänzt werden und das verbesserte Netz zurück in die Cloud übermittelt werden. Dies ist jedoch aufgrund der großen Datenmenge meist nicht sinnvoll.

Des Weiteren zeichnet sich die Erfindung dadurch aus, dass das Netz online in einer Cloud vorliegt. Hierdurch ist es besonders vorteilhaft möglich, bei Anwendern generierte Daten auf direktem Weg zum laufenden Training der KI, also zur Verbesserung eines Online-Netzes zu nutzen.

Insbesondere zeichnet sich die Erfindung auch durch eine eigenerfinderische oder mit zuvor genannten Ideen kombinierbare Idee aus, die vorsieht, dass das Training der KI auf Basis eines Subsets (Trainings-Subset) der zu einer Computertomografie gehörenden Durchstrahlungsbilder erfolgt, wobei die Anwendung des hierbei ermittelten Netzes auf ein von dem Trainings-Subset verschiedenes Subset (Ist-Subset) erfolgt.

Als Subset wird eine in Bezug auf die vollständige Computertomografie eingeschränkte Menge von Drehstellungen verstanden. Dies können zusammenhängende Drehwinkelbereiche aber auch mehrere voneinander in Bezug auf den Drehwinkel getrennte, separate Teilbereiche der Drehstellungen sein. Grundgedanke ist es, dass das Netz zur Korrektur nicht vollständig aus Trainingsdaten gewonnen bzw. trainiert wird, die aus den identischen Drehstellungen stammen, die korrigiert werden sollen. Die beiden Subsets können sich erfindungsgemäß auch teilweise überlagern.

Weitere Einzelheiten, Vorteile und Merkmale der Erfindung ergeben sich nicht nur aus den Ansprüchen, den diesen zu entnehmenden Merkmalen - für sich und/oder in Kombination - sondern auch aus der nachfolgenden Beschreibung der Figuren.

Es zeigt:
- Fig. 1: eine Prinzipdarstellung der erfindungsgemäßen Computertomografie - Anordnung mit drehbarem Target und
- Fig. 2: eine zweite Prinzipdarstellung der erfindungsgemäßen Computertomografie - Anordnung mit drehbarem Target.

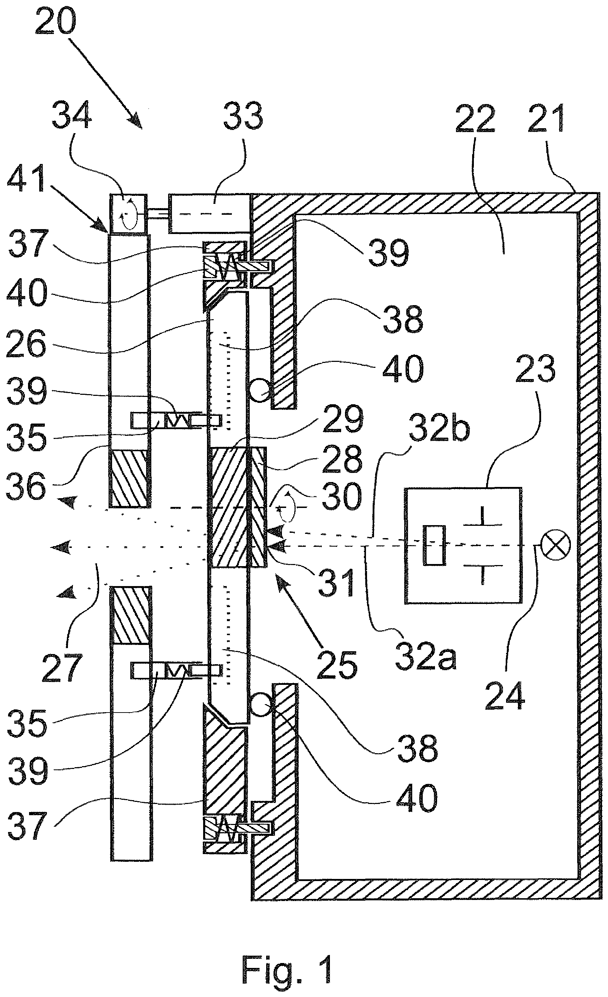

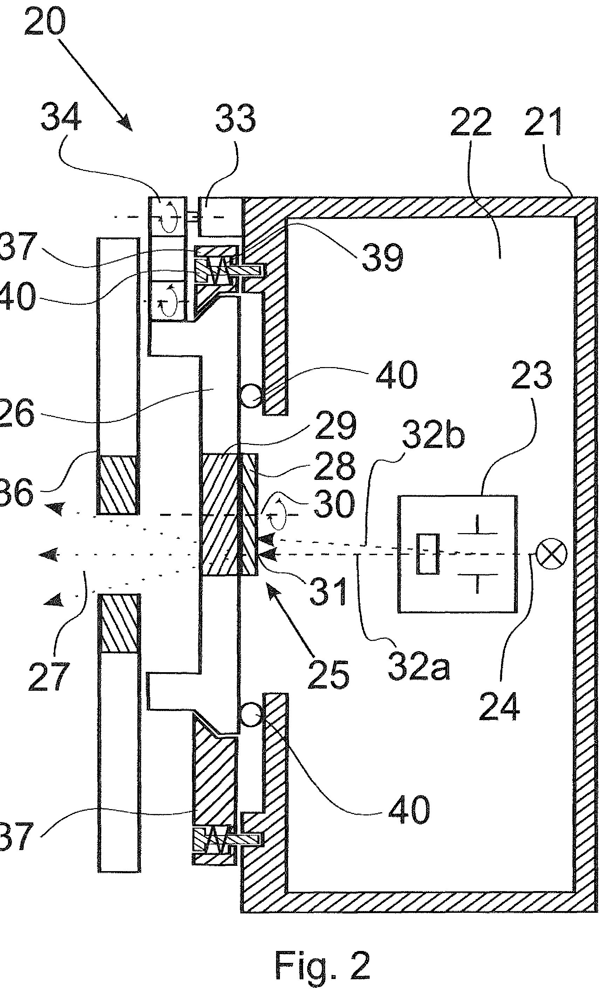

Anhand der Figuren 1 und 2 wird die erfindungsgemäße Vorrichtung einer Röntgenstrahlenquelle 20 für einen Computertomografen mit drehbarem Target 25 verdeutlicht, das hier als Transmissionstarget ausgeführt ist. Die Quelle 20 weist einen Grundkörper 21, auch als Röhrenkopf bezeichnet, auf, der eine Vakuumröhre 22 enthält und von dem diverse Anbauteile ausgehen. In der Vakuumröhre 22 wird ein Elektronenstrahl 24 erzeugt, der durch die Ablenkeinrichtung 23 auf ein Target 25 fokussiert bzw. gelenkt wird und den Brennfleck 31 bildet. Das Target 25 geht von einem Targetträger 26 aus, welcher durch den Exzenterring 37 und die Schrauben 40 gegen die Dichtung 40 gedrückt wird und dadurch die Vakuumröhre 22 verschließt. Auf der Innenseite des Targets 25 befindet sich eine Beschichtung 28 aus beispielsweise Wolfram, die beim Auftreffen des fokussierten Elektronenstrahls 32a, 32b Röntgenstrahlung 27 erzeugt, die nach außen durch das Target hindurch (Transmissionstarget) abgegeben wird. Die Beschichtung 28 geht von einem Substrat 29 aus, welches beispielhaft aus Diamant besteht. Der Targetträger 26 kann zum Beispiel aus einem Metall bestehen. Um die abgegebene Röntgenstrahlung 27 auf einen vorgegebenen Ausschnitt, beispielsweise den Röntgendetektor des Computertomografen zu begrenzen, ist vor dem Target 25 an der Außenseite des Röhrenkopfes 21 eine Strahlblende 36 angeordnet, die nach dem Stand der Technik eine zentrale rechteckige Öffnung aufweist. Zumindest um die Öffnung herum ist die Strahlblende 36 aus die Röntgenstrahlung 27 abschattendem Material wie beispielsweise Wolfram gefertigt (hier schraffiert dargestellt). Die Bereiche weiter außen werden erfindungsgemäß aus kostengünstigerem Material wie Stahl ausgeführt.

Erfindungsgemäß wird das Target 25 zusammen mit dem Targetträger 26 um die Achse 30 im Exzenterring 37 drehbar ausgelegt, wobei die Achse 30 das Target 25 versetzt zum Brennfleck 31 durchdringt, damit bei Drehung des Targetträgers 26 der Elektronenstrahl 32a den Brennfleck 31 auf unterschiedlichen Bereichen der Beschichtung 28 entlang einer Kreisbahn erzeugt. Die Drehbewegung wird nach der hier dargestellten ersten erfindungsgemäßen Ausführungsform durch den Antrieb (Motor) 33, 34 erzeugt, der am Röhrenkopf 21 befestigt ist. Der drehbare Teil 34 des Motors ist an die Außenseite 41 der Strahlblende 36 gekoppelt, beispielsweise durch eine Schneckenradankopplung und dreht diese. Die Drehbewegung wird durch die Mitnehmer 35, beispielsweise Stifte, auf den Targetträger 26 übertragen, indem die Stifte 35 in Sacklöcher 38 eingreifen. Die Ausführung als Sacklöcher ist notwendig, damit das Vakuum in der Vakuumröhre 22 erhalten bleibt. Die Sacklöcher 38 sind zudem als radiale Langlöcher ausgeführt und dadurch sind die Mitnehmer 35 in dem Targertträger 26 radial beweglich, wodurch die Drehachsen für den Targetträger 26 und die Mitnehmer 35 parallel zueinander versetzt angeordnet werden können. Hierdurch können unterschiedliche Exzenterringe 37 verwendet werden. Alternativ kann der Motor 33, 34 selbst auch in der Strahlblende 36 angeordnet sein und dreht nur einen inneren, hier nicht dargestellten Ring, von dem die Mitnehmer 35 ausgehen. Die Drehbarkeit des Targetträgers 26 wird realisiert, indem der Targetträger 26 nur so fest an die Dichtung 40 angedrückt wird, dass eine Drehung noch möglich ist. Die Anpresskraft wird indirekt durch die Schrauben 37 und gegebenenfalls integrierte Federn 39 erzeugt, die den Exzenterring 37 in Richtung der Vakuumröhre 22 drücken und sich nicht mitdrehen. Alternativ oder zusätzlich sind in oder parallel zu den Mitnehmern 35 auch Federn 39 vorgesehen, die direkt am Targetträger 26 angreifen und sich mitdrehen. Da sich die Strahlblende nach der hier dargestellten ersten Ausführungsform dreht, ist deren Öffnung kreisrund ausgeführt. Nach einer alternativen Ausführungsform ist auch vorgesehen, unterschiedliche Kreisbahnen auf der Beschichtung 28 des Targets 25 zur Erzeugung des Brennflecks 31 zu verwenden, indem der Elektronenstrahl 24 durch die Ablenkeinrichtung 23 beispielsweise entlang des Weges 32b auf die Beschichtung 28 gelenkt wird.

Figur 2 zeigt eine alternative Ausgestaltungsform zur Figur 1, wobei zuvor beschriebene Bezugszeichen gelten. Abweichend dazu ist hier vorgesehen, dass der Targetträger 26 direkt vom Motor 33, 34 im Exzenterring 37 gedreht wird. In der hier dargestellten bevorzugten Ausführungsform erfolgt die Kopplung des Motors 33, 34 an die Außenseite des Targetträgers 26 beispielsweise durch einen Band-, Ketten- oder Zahnradantrieb wie Schnecke. Die Kopplung wird an unterschiedliche Exzenterringe 37 anpassbar ausgelegt oder mit dem jeweiligen Exzenterring 37 getauscht. Die Mitnehmer 35 entfallen und die Strahlblende 36 wird nicht drehbar ausgelegt. Alternativ ist auch vorgesehen, dass der Motor 33, 34 an einen nicht dargestellten Zwischenring bzw. Zwischenscheibe, die zwischen der Strahlblende 36 und dem Targetträger 26 angeordnet ist, angekoppelt ist und diesen dreht, wobei von diesem die Mitnehmer 35 ausgehen, die in die hier nicht mehr dargestellten Sacklöcher 38 eingreifen.

## Patentansprüche

1. Vorrichtung zur computertomografischen Untersuchung von Werkstücken, vorzugsweise dimensionellen Messung von Merkmalen an den Werkstücken, umfassend eine Strahlungsquelle (20) für einen Computertomografen, wobei die Strahlungsquelle zumindest umfasst einen Grundkörper (21), von dem eine Vakuumröhre (22) enthaltend eine Einrichtung (23) zur Fokussierung eines Elektronenstrahls (24) auf ein von einem Targetträger (26) ausgehenden Target (25) ausgeht, wobei das Target (25) einen bei Bestrahlung mit Elektronen Röntgenstrahlung (27) erzeugenden Bereich (28) aufweist, der durch eine Beschichtung (28) eines Substrats (29) ausgebildet ist, und wobei der Targetträger (26) mittels außerhalb der Vakuumröhre (22) angeordnete Mittel (33, 34, 35) um eine Achse (30) drehbar ausgebildet ist, und wobei das Target (25) vorzugsweise als Transmissionstarget ausgebildet ist,
**dadurch gekennzeichnet,**
**dass** der Targetträger (26) die Vakuumröhre (22) verschließt, dass die Achse (30) das Target (25) versetzt zum Auftreffpunkt (31) des Elektronenstrahls (32a, 32b) auf das Target (25) durchdringt, und dass die Mittel (33, 34, 35) von dem Grundkörper (21) selbst oder von einer vom Grundkörper (21) ausgehenden und in der Röntgenstrahlung (27) angeordneten Strahlblende (36) ausgehen, und dass die Vorrichtung ausgebildet ist, dass Auftreffpunkt des Elektronenstrahls auf dem Target schrittweise verändert wird.

2. Vorrichtung nach Anspruch 1,
**dadurch gekennzeichnet,**
**dass** der Targetträger (26) von einem Exzenterring (37) ausgeht, in dem der Targetträger um eine Achse (30) drehbar gelagert ist.

3. Vorrichtung nach Anspruch 1,
**dadurch gekennzeichnet,**
**dass** die Mittel (33, 34) zur Drehung der Strahlblende (36) ausgebildet sind, wobei von der Strahlblende (36) zumindest ein Mitnehmer (35) ausgeht, der die Drehbewegung auf den Targetträger (26) überträgt, wobei vorzugsweise der oder die Mitnehmer (35) Stifte sind, der Targetträger (26) Sacklöcher (38), vorzugsweise in radialer Richtung ausgedehnte Langlöcher, aufweist und die Stifte (35) in die Sacklöcher (38) eingeführt sind.

4. Vorrichtung nach Anspruch 1,
**dadurch gekennzeichnet,**
**dass** eine Kopplung mit dem Targetträger (26) realisiert ist durch in dem Targetträger (26) ausgebildete Sacklöcher (38), in die zumindest ein Mitnehmer (35) eingreift, wobei die Sacklöcher (38) bevorzugt als in radialer Richtung ausgedehnte Langlöcher ausgebildet sind, oder durch Eingriff am Umfang des Targetträgers (26).

5. Vorrichtung nach Anspruch 1,
**dadurch gekennzeichnet,**
**dass** zur Erzeugung einer Anpresskraft zwischen dem Targetträger (26) und der Vakuumröhre (22) zumindest ein Anpressmittel (39, 40), wie Feder (39) und/oder Stellschraube (40) vorgesehen ist, welches vorzugsweise zwischen einerseits dem Röhrenkopf (21) oder einem vom Röhrenkopf (21) ausgehenden Halter und andererseits dem Exzenterring (37) und/oder zwischen einerseits der Strahlblende (36) und andererseits dem Targetträger (26) verläuft.

6. Vorrichtung nach zumindest einem der vorhergehenden Ansprüche,
**dadurch gekennzeichnet,**
**dass** zur Überwachung und Regelung der Drehstellung des Targetträger (26) zumindest ein Encoder vorgesehen ist, der aus zumindest Komponenten Maßstab und Lesekopf besteht, wobei eine der Komponenten, bevorzugt der Maßstab, vom Targetträger (26) oder der Strahlblende (36) und die andere Komponente, bevorzugt der Lesekopf, vom Röhrenkopf (21) ausgeht.

7. Vorrichtung nach zumindest einem der vorhergehenden Ansprüche,
**dadurch gekennzeichnet,**
**dass** die Vorrichtung ausgebildet ist, Exzenterringe (37) unterschiedlicher Exzentrizität aufzunehmen, vorzugsweise in dem die unterschiedlichen Exzenterringe identischen Außendurchmesser aufweisen.

8. Vorrichtung nach zumindest einem der vorhergehenden Ansprüche,
**dadurch gekennzeichnet,**
**dass** die Targetbeschichtung (28) segmentweise aus unterschiedlichen Materialien wie beispielsweise Wolfram, Kupfer oder Beryllium und/oder die Targetbeschichtung (28) segmentweise oder kontinuierlich unterschiedlich dick ausgebildet ist.

9. Vorrichtung nach (vorzugsweise) einem der vorhergehenden Ansprüche,
**dadurch gekennzeichnet,**
**dass** ein Antrieb, beispielsweise Piezoantrieb oder Schrittmotor, zur Verschiebung des Targets (25) senkrecht zur Richtung des Elektronenstrahls (32a, 32b) der Röntgenstrahlenquelle (20) angeordnet ist, wobei besonders bevorzugt der das Target (25) aufnehmende Targetträger (26) zusammen mit dem Target (25) senkrecht zu den Elektronenstrahlen (32a, 32b) verschiebbar ausgebildet ist.

10. Vorrichtung nach zumindest einem der vorhergehenden Ansprüche,
**dadurch gekennzeichnet,**
**dass** die Targetbeschichtung (28) in radialer Richtung stufenweise aus unterschiedlichen Materialien wie beispielsweise Wolfram, Kupfer oder Beryllium und/oder unterschiedlicher Dicke ausgebildet ist.

11. Verfahren zur computertomografischen Untersuchung von Werkstücken, vorzugsweise dimensionellen Messung von Merkmalen an Werkstücken, umfassend zumindest die folgenden Schritte: Aufnahme zumindest eines Durchstrahlungsbildsatzes mehrerer Durchstrahlungsbilder des auf einem Drehtisch angeordneten Werkstücks in mehreren Drehstellungen relativ zu einer Strahlungsquelle (20) und einem flächig ausgeprägtem Detektor, Rekonstruktion eines Voxelvolumens, welches Voxel mit zugeordneten Voxelgrauwerten aufweist, aus dem Durchstrahlungsbildsatz und vorzugsweise Ermittlung von Oberflächenmesspunkten aus dem Voxelvolumen mittels Oberflächenextraktionsverfahren, mit einem Computertomografen zumindest umfassend eine Vorrichtung nach zumindest einem der Ansprüchen 1 bis 10,
**dadurch gekennzeichnet,**
**dass** nacheinander unterschiedliche Auftreffpunkte des Elektronenstrahls auf dem Target (25) eingestellt werden, die auf zumindest einer Kreisbahn liegen, indem der das Target aufnehmende Targetträger (26) in unterschiedliche Drehstellungen gebracht wird.

12. Verfahren nach Anspruch 11,
**dadurch gekennzeichnet,**
**dass** die Auftreffpunkte derart eingestellt werden, dass sich die unterschiedlichen Auftreffpunkte auf dem Target (25) nicht überlagern und bevorzugt mindestens 90, besonders bevorzugt mindestens 180 unterschiedliche Auftreffpunkte auf dem Umfang der Kreisbahn verteilt eingestellt werden.

13. Verfahren nach Anspruch 12,
**dadurch gekennzeichnet,**
**dass** unterschiedliche Kreisbahnen eingestellt werden, indem Exzenterringe (37) unterschiedlicher Exzentrizität verwendet werden und/oder indem der Elektronenstrahl radial zur Drehachse, um die der Targetträger (26) gedreht wird, an unterschiedliche Positionen gerichtet wird.

14. Verfahren nach Anspruch 11, 12 oder 13,
**dadurch gekennzeichnet,**
**dass** die Einstellung eines veränderten Auftreffpunkts (31) wahlweise je Messung, je Drehstellung, je Bild bei mehreren Bildern je Drehstellung und/oder je Rasterstellung bei einer Rastertomografie erfolgt, vorzugsweise automatisch anhand der Überwachung der Betriebsstunden der Strahlenquelle (20) und/oder einer vorgegebenen Zeitdauer und/oder anhand des Ergebnisses einer zyklisch wiederholten Messung des Verschleißes des Targets an dem jeweils aktuellen Auftreffpunkt, oder durch manuelles Weiterdrehen durch den Bediener.

15. Verfahren nach Anspruch 14,
**dadurch gekennzeichnet,**
**dass** die Verschleißmessung erfolgt durch Bestimmung der Helligkeit bzw. Intensität der abgegebenen Röntgenstrahlung und/oder durch Bestimmung des Kontrastes in zumindest einem mit dem Detektor aufgenommenen Durchstrahlungsbild bei kurzzeitiger Einstellung eines geänderten Auftreffpunktes (31) des Elektronenstrahls (24) auf dem Target (25) auf einen bisher nicht benutzten Bereich des Targets.

16. Verfahren nach zumindest einem der vorhergehenden Ansprüche 11 bis 14,
**dadurch gekennzeichnet,**
**dass** die Drehstellung des Targetträgers (26) kontinuierlich erfolgt, wobei vorzugsweise zur Vermeidung von Messabweichungen durch beispielsweise Unschärfen die Drehung mit einer geringen Geschwindigkeit von vorzugsweise weniger als 50 µm pro Stunde, besonders bevorzugt weniger als 10 µm pro Stunde erfolgt.

17. Verfahren nach einem der Ansprüche 11 bis 15,
**dadurch gekennzeichnet,**
**dass** die Einstellung eines veränderten Auftreffpunktes (31) des Elektronenstrahls (24) auf dem Target (25) schrittweise und/oder nur dann erfolgt, wenn eine eingestellte Verschleißgrenze des Targets erreicht oder überschritten wird, besonders bevorzugt indem das Target oder der das Target aufnehmende Targetträger (26) in unterschiedliche Drehstellungen gebracht wird und/oder indem Exzenterringe (37) unterschiedlicher Exzentrizität zur Aufnahme des Targets oder Targetträgers (26) verwendet und gedreht werden und/oder indem der Elektronenstrahl an unterschiedliche Positionen auf dem Target gerichtet wird.

## Claims

1. A device for inspecting workpieces by computer tomography, preferably by dimensional measuring of features on the workpieces, comprising a radiation source (20) for a computer tomography unit, wherein the radiation source comprises at least one basic body (21) from which extends a vacuum tube (22) containing a unit (23) for focusing an electron beam (24) on a target (25) extending from a target support (26), wherein the target (25) has a region (28) generating X-rays (27) during irradiation with electrons, said region being formed by a coating (28) of a substrate (29), and wherein the target support (26) is designed rotatable about an axis (30) using means (33, 34, 35) arranged outside the vacuum tube (22), and wherein the target (25) is preferably designed as a transmission target,
**characterized in**
**that** the target support (26) closes the vacuum tube (22), in that the axis (30) passes through the target (25) offset from the point of impingement (31) of the electron beam (32a, 32b) on the target (25), in that the means (33, 34, 35) extend from the basic body (21) itself or from a beam aperture (36) extending from the basic body (21) and arranged in the X-rays (27), and in that the device is designed such that point of impingement of the electron beam on the target is altered step by step.

2. The device according to claim 1,
**characterized in**
**that** the target support (26) extends from an eccentric ring (37) in which the target support is mounted rotatable about an axis (30).

3. The device according to claim 1,
**characterized in**
**that** the means (33, 34) are designed for rotating the beam aperture (36), wherein at least one driver (35) transmitting the rotary movement to the target support (26) extends from the beam aperture (36), wherein the driver(s) (35) is/are preferably pin(s), the target support (26) has blind holes (38), preferably slots extending in the radial direction, and the pins (35) are inserted into the blind holes (38).

4. The device according to claim 1,
**characterized in**
**that** a coupling to the target support (26) is achieved by blind holes (38) formed in the target support (26) and in which at least one driver (35) engages, wherein the blind holes (38) are designed preferably as slots extending in the radial direction, or by engagement at the circumference of the target support (26).

5. The device according to claim 1,
**characterized in**
**that** at least one pressing means (39, 40), such as a spring (39) and/or a setscrew (40), is provided for generating a pressing force between the target support (26) and the vacuum tube (22), said pressing means extending preferably between the tube head (21) or a holder extending from the tube head (21) on the one hand and the eccentric ring (37) on the other hand, and/or between the beam aperture (36) on the one hand and the target support (26) on the other hand.

6. The device according to at least one of the preceding claims,
**characterized in**
**that** at least one encoder is provided for monitoring and controlling the rotary position of the target support (26) and consists of at least the components scale and read head, wherein one of the components, preferably the scale, extends from the target support (26) or beam aperture (36), and the other component, preferably the read head, extends from the tube head (21).

7. The device according to at least one of the preceding claims,
**characterized in**
**that** the device is designed to receive eccentric rings (37) of differing eccentricity, preferably with the different eccentric rings having an identical outer diameter.

8. The device according to at least one of the preceding claims,
**characterized in**
**that** the target coating (28) is formed in segments from different materials, for example tungsten, copper or beryllium, and/or the target coating (28) is designed with a differing thickness per segment or continuously.

9. The device according to (preferably) any of the preceding claims,
**characterized in**
**that** a drive unit, for example a piezo drive or stepping motor, is arranged vertical to the direction of the electron beam (32a, 32b) of the X-ray source (20) for movement of the target (25), wherein particularly preferably the target support (26) receiving the target (25) is designed movable vertically to the electron beams (32a, 32b) together with the target (25).

10. The device according to at least one of the preceding claims,
**characterized in**
**that** the target coating (28) is formed in the radial direction in steps from different materials, for example tungsten, copper or beryllium, and/or is of differing thickness.

11. A method for inspecting workpieces by computer tomography, preferably by dimensional measuring of features on workpieces, comprising at least the following steps: recording of at least one radiographic image set made up of several radiographic images of the workpiece arranged on a rotary table in several rotary positions relative to a radiation source (20) and to a predominantly planar detector, reconstruction of a voxel volume having voxels with associated voxel gray values from the radiographic image set, and preferably determination of surface measurement points from the voxel volume by means of surface extraction methods, using a computer tomography unit at least comprising a device according to at least one of claims 1 to 10,
**characterized in**
**that** different points of impingement of the electron beam on the target (25), situated on at least one circular path, are set one after the other by moving the target support (26) receiving the target into different rotary positions.

12. The method according to claim 11,
**characterized in**
**that** the points of impingement are set such that the different points of impingement on the target (25) do not overlap, and preferably at least 90, particularly preferably at least 180 different points of impingement are set on the circumference of the circular path in a distributed manner.

13. The method according to claim 12,
**characterized in**
**that** different circular paths are set by using eccentric rings (37) of differing eccentricity and/or by the electron beam being aimed at different positions radially to the rotary axis about which the target support (26) is rotated.

14. The method according to claim 11, 12 or 13,
**characterized in**
**that** an altered point of impingement (31) is set optionally per measurement, per rotary position, per image in the case of several images per rotary position, and/or per grid position in the case of grid tomography, preferably automatically based on monitoring of the operating hours of the radiation source (20) and/or a predefined duration and/or based on the result of a cyclically repeated measurement of the wear on the target at the current point of impingement, or by further manual rotation by the operator.

15. The method according to claim 14,
**characterized in**
**that** the wear is measured by determining the brightness or intensity of the emitted X-rays and/or by determining the contrast in at least one radiographic image recorded using the detector during a brief setting of an altered point of impingement (31) of the electron beam (24) on the target (25) to a previously unused region of the target.

16. The method according to at least one of the preceding claims 11 to 14,
**characterized in**
**that** the rotary position of the target support (26) is set continuously, wherein rotation is at a low speed of preferably less than 50 µm per hour, particularly preferably less than 10 µm per hour, preferably for preventing measurement deviations, for example caused by blurring.

17. The method according to any of claims 11 to 15,
**characterized in**
**that** an altered point of impingement (31) of the electron beam (24) on the target (25) is set step by step and/or only when a set wear limit of the target has been reached or exceeded, particularly preferably by the target or the target support (26) receiving the target being moved into different rotary positions and/or by using eccentric rings (37) of differing eccentricity for receiving the target or target support (26) and rotating them, and/or by aiming the electron beam at different positions on the target.

## Revendications

1. Dispositif de mesure tomographique assistée par ordinateur, de pièces d'œuvre, de préférence de mesure dimensionnelle de caractéristiques sur les pièces d'œuvre, comprenant une source de rayonnement (20) pour un tomographe informatisé, sachant que la source de rayonnement comprend au moins un corps de base (21) depuis lequel part un équipement (23) contenant un tube à vide (22) pour concentrer un faisceau électronique (24) sur une cible (25) partant d'un porte-cible (26), sachant que la cible (25) présente une zone (28) générant un rayonnement X (27) lors d'une radiation aux électrons, laquelle zone est formée par un revêtement (28) d'un substrat (29), et sachant que le porte-cible (26) est conçu à l'aide de moyens (33, 34, 35) disposés en dehors du tube à vide (22) de manière à pouvoir tourner autour d'un axe (30), et sachant que la cible (25) est conçue de préférence sous forme de cible de transmission,
**caractérisé en ce**
**que** le porte-cible (26) obture le tube à vide (22), que l'axe (30) traverse la cible (25) de manière décalée par rapport au point d'impact (31) du faisceau électronique (32a, 32b) sur la cible (25), et que les moyens (33, 34, 35) partent du corps de base (21) lui-même ou partent d'un écran de faisceau (36) partant du corps de base (21) et disposé dans le rayonnement X (27), et que le dispositif est conçu de telle sorte que le point d'impact du faisceau électronique sur la cible est modifié pas à pas.

2. Dispositif selon la revendication 1,
**caractérisé en ce**
**que** le porte-cible (26) part d'une bague excentrique (37) dans laquelle le porte-cible est monté de manière pouvoir tourné autour d'un axe (30).

3. Dispositif selon la revendication 1,
**caractérisé en ce**
**que** les moyens (33, 34) sont conçus pour la rotation de l'écran de faisceau (36), sachant que part de l'écran de faisceau (36) au moins un entraîneur (35) qui transmet le mouvement de rotation au porte-cible (26), sachant que de préférence, le ou les entraîneurs (35) sont des broches, que le porte-cible (26) présente des trous borgnes (38), de préférence des trous oblongs étendus dans le sens radial et que les broches (35) sont insérées dans les trous borgnes (38).

4. Dispositif selon la revendication 1,
**caractérisé en ce**
**qu'**un couplage est réalisé avec le porte-cible (26) au moyen des trous borgnes (38) constitués dans le porte-cible (26) dans lesquels au moins un entraîneur (35) s'engage, sachant que les trous borgnes (38) sont conçus de préférence sous forme de trous oblongs étendus dans le sens radial ou au moyen d'un engagement sur la circonférence du porte-cible (26).

5. Dispositif selon la revendication 1,
**caractérisé en ce**
**qu'**est prévu, pour générer une force de pression entre le porte-cible (26) et le tube à vide (22), au moins un moyen de pression (39, 40), tel qu'un ressort et/ou une vis de réglage (40), qui s'étend de préférence entre, d'un côté, la tête de tube (21) ou un support partant de la tête de tube (21) et, de l'autre côté, la bague excentrique (37) et/ou entre, d'un côté, l'écran de faisceau (36) et, de l'autre côté, le porte-cible (26).

6. Dispositif selon au moins l'une des revendications précédentes,
**caractérisé en ce**
**qu'**est prévu, pour la surveillance et le réglage de la position de rotation du porte-cible (26), au moins un codeur qui est constitué au moins des composants échelle graduée et tête de lecture, sachant qu'un des composants, de préférence l'échelle graduée part du porte-cible (26) ou de l'écran de faisceau (36) et que l'autre composant, de préférence la tête de lecture, part de la tête de tube (21)

7. Dispositif selon au moins l'une des revendications précédentes,
**caractérisé en ce**
**que** le dispositif est constitué pour accueillir des bagues excentriques (37) de différentes excentricités, sachant que de préférence les différentes bagues excentriques présentent des diamètres extérieurs identiques.

8. Dispositif selon au moins l'une des revendications précédentes,
**caractérisé en ce**
**que** le revêtement de la cible (28) est constitué segment par segment de différents matériaux tels que tungstène, cuivre ou béryllium et/ou que le revêtement de la cible (28) présente une épaisseur différente d'un segment à l'autre ou en continu.

9. Dispositif selon (de préférence) l'une des revendications précédentes,
**caractérisé en ce**
**qu'**un entraînement, par exemple piézo-actionneur ou moteur pas à pas, est disposé pour décaler la cible (25) perpendiculairement au sens du faisceau électronique (32a, 32b) de la source de rayonnement X (20), sachant que notamment de préférence, le porte-cible (26) accueillant la cible (25) est conçu de manière à être décalable avec la cible (25) perpendiculairement aux faisceaux électroniques (32a, 32b).

10. Dispositif selon au moins l'une des revendications précédentes,
**caractérisé en ce**
**que** le revêtement de la cible (28) est constitué en étapes successives dans le sens radial de différents matériaux tels que tungstène, cuivre ou béryllium et/ou de différentes épaisseurs.

11. Procédé de mesure tomographique assistée par ordinateur, de pièces d'œuvre, de préférence de mesure dimensionnelle de caractéristiques sur des pièces d'œuvre, comprenant au moins les étapes suivantes : Prise d'au moins un jeu d'images radiographiques de plusieurs images radiographiques de la pièce d' œuvre disposée sur une table rotative dans plusieurs positions de rotation par rapport à une source de rayonnement (20) et un détecteur plat, reconstruction d'un volume de voxel qui présente des voxels avec des valeurs de gris associées, à partir du jeu d'images radiographiques et de préférence, détermination des points de mesure superficiels à partir du volume de voxel au moyen de procédés d'extraction de surface avec un tomographe informatisé comprenant au moins un dispositif selon au moins l'une des revendications 1 à 10,
**caractérisé en ce**
**que** sont réglés, les uns après les autres, des points d'impact du faisceau électronique sur la cible (25), lesquels se situent sur au moins une trajectoire circulaire, en mettant dans différentes positions de rotation le porte-cible (26) accueillant la cible.

12. Procédé selon la revendication 11,
**caractérisé en ce**
**que** les points d'impact sont réglés de telle sorte que les différents points d'impact sur la cible (25) se chevauchent et que de préférence au moins 90, notamment de préférence au moins 180 points d'impact différents sont réglés répartis sur la circonférence de la trajectoire circulaire.

13. Procédé selon la revendication 12,
**caractérisé en ce**
**que** sont réglés différentes trajectoires circulaires en utilisant des bagues excentriques (37) de différentes excentricités et/ou en orientant le faisceau électronique selon différentes positions radialement par rapport à l'axe de rotation autour duquel le porte-cible (26) est tourné.

14. Procédé selon la revendication 11, 12 ou 13,
**caractérisé en ce**
**que** le réglage d'un point d'impact (31) modifié a lieu au choix pour chaque mesure, position de rotation, image dans le cas de plusieurs images pour chaque position de rotation et/ou position de trame dans le cas de la tomographie à trame, de préférence automatiquement à l'aide de la surveillance des heures de fonctionnement de la source de rayonnement (20) et/ou d'une durée prédéfinie et/ou à l'aide du résultat d'une mesure répétée cycliquement de l'usure de la cible au point d'impact actuel respectif ou par poursuite de la rotation de manière manuelle par l'utilisateur.

15. Procédé selon la revendication 14,
**caractérisé en ce**
**que** la mesure d'usure a lieu en déterminant la luminosité ou l'intensité du rayonnement X émis et/ou en déterminant le contraste dans au moins une image radiographique prise avec le détecteur lors du réglage de courte durée d'un point d'impact (31) modifié du faisceau électronique (24) sur la cible (25) sur une zone encore inutilisée jusqu'ici de la cible.

16. Procédé selon au moins l'une des revendications 11 à 14,
**caractérisé en ce**
**que** la position de rotation du porte-cible (26) a lieu en continu, sachant que de préférence pour éviter des écarts de mesure par exemple par flou, la rotation a lieu à une faible vitesse s'élevant de préférence à moins de 50 µm par heure, notamment de préférence à moins de 10 µm par heure.

17. Procédé selon l'une des revendications 11 à 15,
**caractérisé en ce**
**que** le réglage d'un point d'impact modifié (31) du faisceau électronique (24) sur la cible (25) a lieu par pas et/ou uniquement lorsqu'un seuil d'usure réglé de la cible est atteint ou dépassé, notamment de préférence en mettant la cible ou le porte-cible (26) accueillant la cible dans différentes positions de rotation et/ou en utilisant des bagues excentriques (37) de différentes excentricités pour accueillir la cible ou le porte-cible (26) et les tournant et/ou en dirigeant le faisceau électronique sur différentes positions sur la cible.
